# EUROPÄISCHE PATENTSCHRIFT

(11) **EP 3 895 267 B1**
(45) Veröffentlichungstag und Bekanntmachung des Hinweises auf die Patenterteilung: **29.05.2024**
(21) Anmeldenummer: 19736392.2
(22) Anmeldetag: 09.07.2019
(51) Int. Cl.: H02G 1/12

(54) **VERFAHREN ZUR ENTFERNUNG EINER SCHIRMFOLIE EINES ELEKTRISCHEN KABELS MITTELS EINER ROTATIVEN ABISOLIERMASCHINE, SOWIE VORRICHTUNG ZUR UNTERSTÜTZUNG DER ENTFERNUNG EINER SCHIRMFOLIE EINES ELEKTRISCHEN KABELS**
METHOD FOR REMOVING A SHIELDING FOIL OF AN ELECTRICAL CABLE BY MEANS OF A ROTARY STRIPPING MACHINE, AND DEVICE FOR SUPPORTING THE REMOVAL OF A SHIELDING FOIL OF AN ELECTRICAL CABLE
PROCÉDÉ DE RETRAIT D'UN FILM DE BLINDAGE D'UN CÂBLE ÉLECTRIQUE AU MOYEN D'UNE MACHINE À DÉNUDER ROTATIVE, AINSI QUE DISPOSITIF POUR ASSISTER LE RETRAIT D'UN FILM DE BLINDAGE D'UN CÂBLE ÉLECTRIQUE

(30) Priorität: 14.12.2018 WO PCT/EP2018/084903
(43) Veröffentlichungstag der Anmeldung: 20.10.2021
(73) Patentinhaber: Schleuniger AG, 3608 Thun (CH)
(72) Erfinder: BERGER, Patrick, 3612 Steffisburg (CH); DESCHLER, Raphael, 3653 Oberhofen (CH); JOST, Michael, 3600 Thun (CH)
(74) Vertreter: BOVARD AG
(86) Internationale Anmeldenummer: PCT/EP2019/068425
(87) Internationale Veröffentlichungsnummer: WO 2020/119960

(56) Entgegenhaltungen:
- EP-A1- 2 976 818
- EP-A1- 3 089 294
- EP-A1- 3 125 382
- EP-A1- 3 447 865
- EP-A2- 0 673 099
- WO-A1-2018/060880
- DE-A1-102007 053 825
- DE-U1-202008 017 576
- JP-A- 2000 092 644
- JP-B2- 3 469 398
- US-A- 4 815 207
- US-A1- 2018 138 673

## Beschreibung

### Technisches Gebiet

Die vorliegende Erfindung bezieht sich auf ein Verfahren zur Entfernung einer Schirmfolie eines elektrischen Kabels. Insbesondere bezieht sich die Erfindung auf ein Verfahren zur Entfernung einer Schirmfolie eines elektrischen Kabels mittels einer rotativen Abisoliermaschine. Speziell bezieht sich die Erfindung auf ein Verfahren zur Entfernung einer teilweise isolierenden und teilweise leitfähigen Schirmfolie eines elektrischen Kabels mittels einer rotativen Abisoliermaschine.

### Stand der Technik

Die Verarbeitung der Kabelenden von elektrischen Kabeln, insbesondere Koaxialkabeln mit einer Schirmfolie, ist ein mehrschrittiger Prozess, ausgehend vom Ablängen durch Schneiden oder Sägen der Kabel bis zum Crimpen eines Steckers auf den Innenleiter. Ein Teilschritt dieses Prozesses ist das Entfernen der Schirmfolie, die meist spiralförmig um das metallische Abschirmgeflecht des elektrischen Kabels aufgewickelt ist. Das Entfernen der Schirmfolie, die meist aus einer mit PET überzogenen Alufolie besteht, ist ein kompliziertes Vorgehen, weil die Schirmfolie üblicherweise sehr dünn und an gewissen Stellen durch ihre Überlappung doppelschichtig ist.

Im oben erwähnten Kabelend-Verarbeitungsverfahren wird bis heute meistens die Isolation bis auf die Schirmfolie eingeschnitten und abgezogen. Die Schirmfolie wird normalerweise anschliessend manuell entfernet. Eine manuelle Entfernung der Folie ist mit Unsicherheiten behaftet, und es kann keine konstante Bearbeitungsqualität garantiert werden. Zudem dauert dieser von Hand ausgeführter Schritt deutlich länger, als wenn dieser Schritt Teil eines automatischen Ablaufes ist, und ist deshalb mit höheren Langzeitkosten verknüpft.

Bei einem üblichen Koaxialkabel, bei welchem keine Schirmfolie vorhanden ist, wird das Abisolieren stufenweise durchgeführt. Meistens durchtrennt der erste Einschnitt den äusseren Schutzmantel und den Schirm, worauf die abgetrennten Schichten sogleich abgezogen werden. Danach wird das Dielektrikum bis zum Innenleiter eingeschnitten und teilweise oder ganz abgezogen. Daraufhin wird der Schutzmantel bis auf den Schirm eingeschnitten und teilweise oder ganz abgezogen. Ein Teilabzug schützt den Schirm oder den Innenleiter, zum Beispiel vor dem Ausfransen oder Oxidieren, bis zur weiteren Verarbeitung des Kabels.

Bei einem Kabel mit einer Schirmfolie kann die Entfernung der isolierenden Umhüllung mit einer aus dem Stand der Technik bekannten rotativen Abisoliermaschine durchgeführt werden. Danach wird die Schirmfolie manuell bis zur gewünschten Stelle abgewickelt und abgeschnitten. Wie oben erläutert, stellt die Entfernung der meistens dünnen Schirmfolie eine besondere Herausforderung dar, da sie, im Gegensatz zur Isolation, nicht rotativ eingeschnitten werden kann, da das rotative Schneiden der Schirmfolie durch die Unrundheiten des Kabels meist zu einer unerwünschten Verletzung des Schirmgeflechts führen würde. Eine Vorrichtung für die Entfernung einer Schirmfolie eines elektrischen Kabels ist aus der Patentanmeldung EP3089294A1 bekannt, welche vier radial gegen das Rundkabel bewegbare Messer zum Anschneiden der Schirmfolie aufweist. Jedes Messer ist dabei einer Kabelader des Rundkabels zugeordnet. Die Messer weisen jeweils konkav geformte Schneiden auf. Die Messer sind mit Führungselementen versehen, die Führungsabschnitte aufweisen, in die die von der Schirmfolie umhüllten Kabeladern aufnehmbar sind. Die Messer stehen gegenüber den Führungselementen im Bereich der Führungsabschnitte um einen Überstand vor. Die Führungsabschnitte weisen eine konkave kreiszylindrische Form auf und bilden eine konkave Anschlagfläche für die Kabeladern. Ferner ist ein Verfahren für die Entfernung einer Schirmfolie eines Kabels aus der Patentanmeldung EP3447865A1 bekannt, wobei das Verfahren folgende Schritte umfasst: Bereitstellen des Mantelleitungskabels mit der Schirmfolie, wobei die Schirmfolie eine im Wesentlichen entlang eines Umfangs der Schirmfolie verlaufende Sollbruchstelle aufweist; Biegen eines Teilbereichs des Mantelleitungskabels mit der Schirmfolie in eine erste Richtung zum Erzeugen einer derartigen Reißspannung an der Sollbruchstelle auf einem Teil des Umfangs der Schirmfolie, dass die Schirmfolie an der Sollbruchstelle auf einem Teil des Umfangs der Schirmfolie reißt; Bewegen eines ersten Teils des Mantelleitungskabels in einer im Wesentlichen ellipsenförmigen, insbesondere kreisförmigen, Bewegung zum Erzeugen einer Reißspannung über im Wesentlichen den gesamten Umfang der Schirmfolie, so dass die Schirmfolie an der Sollbruchstelle über den gesamten Umfang der Schirmfolie reißt; und Entfernen des von dem Mantelleitungskabel getrennten Teils der Schirmfolie von dem Mantelleitungskabel.

Aus dem Stand der Technik sind Verfahren und Vorrichtungen bekannt, welche die Entfernung der metallischen Abschirmung oder der Schirmfolie eines koaxialen Kabels durch eine thermische Behandlung der zu entfernenden Abschirmung oder Folie unterstützen. Die bekannten Verfahren, die auf einer unterstützenden thermischen Behandlung der Schirmfolie basieren, führen nicht immer zu befriedigenden und vor allem wiederholbaren Resultaten. Aus dem Stand der Technik, wie zum Beispiel aus EP2976818A1 oder DE102007053825A1, sind ausserdem Abisoliervorrichtungen mit Mitteln zur Erkennung einer Berührung eines elektrischen Leiters bekannt.

Ausgehend vom Stand der Technik liegt der vorliegenden Erfindung daher die Aufgabe zugrunde, vorbesagte Nachteile zu überwinden und ein Verfahren zur Entfernung einer Schirmfolie eines elektrischen Kabels vorzuschlagen, das es ermöglicht, die Schirmfolie zufriedenstellend und reproduzierbar mit einem automatisierten Ablauf zu entfernen, und dabei das darunterliegende metallische Schirmgeflecht möglichst wenig zu verletzen.

### Zusammenfassung der Erfindung

Gemäss der vorliegenden Erfindung werden diese Ziele vor allem durch die Elemente des unabhängigen Anspruchs erreicht. Weitere vorteilhafte Ausführungsformen gehen ausserdem aus den abhängigen Ansprüchen und der Beschreibung hervor.

Insbesondere werden die Ziele der vorliegenden Erfindung erreicht durch ein Verfahren zur Entfernung einer Schirmfolie eines elektrischen Kabels mit einer Längsachse, welches von der Längsachse ausgehend nach aussen mindestens einen Innleiter, ein Dielektrikum, die Schirmfolie und einen isolierenden Mantel aufweist, wobei das Kabel vorzugsweise ein Schirmgeflecht zwischen Dielektrikum und Schirmfolie aufweist, umfassend die folgenden Schritte:
a. Erzeugen eines Einschnitts einer ersten Tiefe im isolierenden Mantel des elektrischen Kabels, zum Beispiel mittels der rotierenden Messer einer rotativen Abisoliervorrichtung, wobei die erste Tiefe kleiner oder gleich der Dicke des isolierenden Mantels ist;
b. Erzeugen einer Sollbruchstelle in der Schirmfolie durch Eindrücken mindestens eines radial zustellbaren Perforationswerkzeugs durch den im Schritt a. erzeugten Einschnitt bis das Perforationswerkzeug eine zweite Tiefe erreicht hat, wobei die zweite Tiefe mindestens der Dicke des isolierenden Mantels plus wenigstens der Hälfte der Dicke der Schirmfolie entspricht;
c. Durchreissen der Schirmfolie an der Sollbruchstellte; und
d. Abziehen der Schirmfolie,
wobei das Perforationswerkzeug mit Mitteln zur Detektion einer Berührung mit einem elektrisch leitfähigen Gegenstand verbunden ist, und wobei das Perforationswerkzeug nach einer Detektion einer Berührung mit der Schirmfolie oder mit dem Schirmgeflecht um einen vorbestimmten Wert weiter in Richtung des Innenleiters des elektrischen Kabels radial zugestellt wird.

Die Erfinder haben erkannt, dass es vorteilhaft ist, die Sollbruchstelle in der Schirmfolie durch Eindrücken mindestens eines radial zustellbaren Perforationswerkzeugs durch einen Einschnitt im isolierenden Mantel des elektrischen Kabels zu erzeugen. Der Einschnitt ist vorzugsweise mittels einer rotativen Abisoliervorrichtung erzeugt worden.

Dank den Mitteln zur Detektion einer Berührung mit einem elektrisch leitfähigen Gegenstand kann sichergestellt werden, dass eine ausreichende tiefe Sollbruchstelle in der Schirmfolie erzeugt wird, indem das Perforationswerkzeug nach der Berührung mit der Schirmfolie oder mit dem Schirmgeflecht um einen vorbestimmten Wert weiter zugestellt wird, wobei das darunterliegende metallische Schirmgeflecht möglichst wenig verletzt wird.

Der vorbestimmte Wert kann zum Beispiel der Dicke der Schirmfolie oder einem Bruchteil des Durchmessers des Kabels oder irgendeinem anderen charakteristischen Wert des Kabels entsprechen.

In einer ersten bevorzugten Ausführungsform des erfindungsgemässen Verfahrens, wird zwischen den Schritten b. und c. oder zwischen den Schritten c. und d. das Perforationswerkzeug an eine Position ausserhalb des isolierenden Mantels zurückgestellt. Dadurch kann das Abziehen einfach erfolgen, unter anderem kann das Kabel gebogen werden, um die Schirmfolie an der Sollbruchstelle reissen zu lassen. Wenn sich das Perforationswerkzeug noch im Einschnitt befände, würde ein Biegen des Kabels zum Beispiel zu einer Verletzung des Schirmgeflechts führen.

In einer weiteren bevorzugten Ausführungsform des erfindungsgemässen Verfahrens, wird zwischen den Schritten a. und b. der isolierende Mantel teilweise oder voll abgezogen. Dadurch kann, falls nötig, ein Perforationswerkzeug eingesetzt werden, welches grösser ist als die Breite des im isolierenden Mantel erzeugten Einschnitts. Vorteilhafterweise werden während dem Teilabzug oder dem Vollabzug des isolierenden Mantels allfällige Berührungen der Messer der rotativen Abisoliermaschine mit der Schirmfolie oder mit dem Schirmgeflecht detektiert, falls der Abzug zum Beispiel mit der rotativen Abisoliervorrichtung durchgeführt wird. Dadurch kann eine Verletzung der Schirmfolie oder des Schirmgeflechts festgestellt werden.

In einer anderen bevorzugten Ausführungsform des erfindungsgemässen Verfahrens besteht die Schirmfolie mindestens teilweise aus Metall, wobei das Eindrücken des Perforationswerkzeuges gestoppt wird, sobald eine Berührung des Perforationswerkzeuges mit der Schirmfolie detektiert wird. Dadurch kann sichergestellt werden, dass eine ausreichende tiefe Sollbruchstelle in der Schirmfolie erzeugt wird.

In einer anderen bevorzugten Ausführungsform des erfindungsgemässen Verfahrens, wird das Eindrücken des Perforationswerkzeuges gestoppt, sobald eine Berührung des Perforationswerkzeuges mit der Schirmfolie oder dem Schirmgeflecht detektiert wird. Dadurch kann sichergestellt werden, dass das Eindrücken mit dem Perforationswerkzeug gestoppt wird, wenn eine Berührung entweder mit dem metallischen Teil der Schirmfolie oder mit dem Schirmgeflecht des Kabels detektiert wird. Damit kann eine Verletzung des Schirmgeflechts verhindert werden.

In einer anderen bevorzugten Ausführungsform des erfindungsgemässen Verfahrens wird die relative Position des Perforationswerkzeugs bezüglich der Längsachse bei der Detektion einer Berührung des Perforationswerkzeugs mit der Schirmfolie oder mit dem Schirmgeflecht zu einer Analysevorrichtung übermittelt wird. Dadurch kann die Position des Perforationswerkzeugs gemerkt werden, was zu statistischen Zwecken gebraucht werden kann. Zum Beispiel kann dadurch eine statistische Analyse der Durchmesser, bei welchen eine Berührung mit der Schirmfolie beziehungsweise mit dem Schirmgeflecht detektiert worden ist, durchgeführt werden. Eine solche Analyse kann zu einer Optimierung des Prozesses benutzt werden oder vorteilhaft sein, um die Qualität eines Kabelsatzes zu evaluieren.

In einer anderen bevorzugten Ausführungsform des erfindungsgemässen Verfahrens wird Schritt b. mindestens einmal wiederholt, nachdem das Perforationswerkzeug zurück gefahren wurde und um einen Verstellwinkel um das elektrische Kabel gedreht wurde. Dadurch kann sichergestellt werden, dass die Sollbruchstelle entlang einer ausreichend langen Länge der Schirmfolie, vorzugsweise entlang des gesamten Umfangs der Schirmfolie, erzeugt wird.

In einer anderen bevorzugten Ausführungsform des erfindungsgemässen Verfahrens ist das Perforationswerkzeug ein Messer einer rotativen Abisoliervorrichtung, wobei das Messer während des Schritts b. nicht rotiert. Dadurch braucht es nur eine Vorrichtung, um den Einschnitt im insolierenden Mantel und die Sollbruchstelle in der Schirmfolie zu erzeugen.

In einer weiteren bevorzugten Ausführungsform des erfindungsgemässen Verfahrens ist das Perforationswerkzeug eine Nadel. Dadurch kann eine Sollbruchstelle durch Perforierung besonders einfach erzeugt werden.

In einer weiteren bevorzugten Ausführungsform des erfindungsgemässen Verfahrens ist die Nadel gefedert. Dadurch kann sichergestellt werden, dass das Schirmgeflecht durch die Nadel nicht beschädigt wird.

In einer weiteren bevorzugten Ausführungsform des erfindungsgemässen Verfahrens ist das Perforationswerkzeug ultraschallerregt. Dadurch kann eine Sollbruchstelle besonders einfach durch Reibung oder Wärme und ohne Druck auf die Schirmfolie und daher ohne Druck auf das Schirmgeflecht erzeugt werden. Eine Verletzung der Schirmfolie kann somit vermieden werden. Darüber hinaus kann die Form und die Schärfe des Perforationswerkezugs an die zu entfernende Schirmfolie angepasst werden.

In einer anderen bevorzugten Ausführungsform des erfindungsgemässen Verfahrens Verfahren weist die Ultraschallerregung eine Frequenz zwischen 10 bis 100 KHz, vorteilhafterweise zwischen 20 und 80 KHz, vorzugsweise zwischen 30 und 50 KHz, auf. Dadurch kann die Erregungsfrequenz des Perforationswerkzeugs an die zu entfernende Schirmfolie angepasst werden. Insbesondere kann die Frequenz aufgrund des Materials der Schirmfolie und/ oder deren Dicke ausgewählt werden. Ausgewählt wird vorzugsweise die Frequenz, die eine effiziente Erzeugung der Sollbruchstelle ermöglicht aber eine möglichst kleine Verletzung des Schirmgeflechts gewährleistet.

In einer weiteren bevorzugten Ausführungsform des erfindungsgemässen Verfahrens wird Schritt c. und/oder Schritt d. mittels einer Abziehvorrichtung durchgeführt wird, die Klemmbacken zum Klemmen des isolierenden Mantels des elektrischen Kabels oder der Schirmfolie umfasst, wobei durch eine translatorische und/oder drehende Bewegung der Klemmbacken die Schirmfolie an der Sollbruchstelle reisst. Durch den Einsatz einer solchen Abziehvorrichtung kann der Abziehvorgang besonders einfach erfolgen.

In einer anderen bevorzugten Ausführungsform des erfindungsgemässen Verfahrens führen die Klemmbacken zwischen Schritt c. und d. oder während Schritt c. eine Pendelbewegung um die Längsachse. Dadurch wird die Schirmfolie während dem Abzug vom Schirmgeflecht immer wieder gelöst damit sie leichter abgezogen werden kann.

In einer anderen bevorzugten Ausführungsform des erfindungsgemässen Verfahrens wird bei der Pendelbewegung der Klemmbacken um die Längsachse zuerst eine Bewegung gegen die Wickelrichtung des Schirmgeflechts ausgeführt. Dadurch kann die anfängliche Haftreibung zwischen Schirmfolie und Schirmgeflecht überwunden werden, damit die Schirmfolie besonders einfach abgezogen werden kann.

In einer anderen bevorzugten Ausführungsform des erfindungsgemässen Verfahrens wird die Schirmfolie durch die Bewegung der Klemmbacken das Kabel mit der Schirmfolie an der Sollbruchstelle gebogen. Dadurch kann das Reissen der Schirmfolie an der Sollbruchstelle einfach erzeugt werden.

In einer anderen bevorzugten Ausführungsform des erfindungsgemässen Verfahrens bewegen sich die Klemmbacken kreis- oder spiralförmig relativ zur Längsachse des Kabels. Dadurch können der Abziehvorgang und das Reissen der Schirmfolie an der Sollbruchstelle besonders einfach erfolgen.

In einer weiteren bevorzugten Ausführungsform des erfindungsgemässen Verfahrens sind die Klemmbacken der Abziehvorrichtung an einer kardanischen Aufhängung angebracht. Dadurch können sich die Klemmbacken spiralförmig um die Achse des Kabels bewegen und die Schirmfolie an der Sollbruchstelle gebogen werden. Vorteilhafterweise sind die Klemmbacken in der kardanischen Aufhängung hydraulisch mit einem Volumenstromteiler oder mit einer gegenläufigen Spindel angetrieben. Damit die Klemmbacken immer symmetrisch bezüglich der Längsachse betrieben werden.

In einer weiteren bevorzugten Ausführungsform des erfindungsgemässen Verfahrens besteht die mit dem isolierenden Mantel des elektrischen Kabels oder mit der Schirmfolie in Berührung kommende Oberfläche der Klemmbacken aus einem bestimmten Material, so dass der zwischen den Klemmbacken und dem isolierenden Mantel herrschende Haftreibungskoeffizient grösser ist als jener zwischen einem Metall und dem isolierenden Mantel. Dadurch können die Klemmbacken des isolierenden Mantels besonders gut klemmen und eine ausreichende grosse Zugkraft auf die Sollbruchstelle der Schirmfolie erzeugen.

In einer anderen bevorzugten Ausführungsform des erfindungsgemässen Verfahrens besteht die mit dem isolierenden Mantel des elektrischen Kabels oder mit der Schirmfolie in Berührung kommende Oberfläche der Klemmbacken aus einem Elastomer. Dadurch kann der Haftreibungskoeffizient zwischen insolierenden Mantel und Klemmbacken einfach erhöht werden. Darüber hinaus wird das Kabel dank des Elastomers durch das Klemmen nicht verformt.

In einer weiteren bevorzugten Ausführungsform des erfindungsgemässen Verfahrens weisen die Klemmbacken Mittel zum Erzeugen einer Saugkraft auf dem isolierenden Mantel des elektrischen Kabels oder auf die Schirmfolie auf. Dadurch können die Klemmbacken den isolierenden Mantel besonders gut klemmen und eine ausreichend grosse Zugkraft auf die Sollbruchstelle der Schirmfolie erzeugen.

In einer anderen bevorzugten Ausführungsform des erfindungsgemässen Verfahrens weist die mit dem isolierenden Mantel des elektrischen Kabels oder mit der Schirmfolie in Berührung kommende Oberfläche der Klemmbacken eine haftreibungskrafterhöhende Struktur auf. Dadurch können die Klemmbacken den isolierenden Mantel besonders gut klemmen und ebenfalls eine genügend grosse Zugkraft auf die Sollbruchstelle der Schirmfolie erzeugen.

In einer anderen bevorzugten Ausführungsform des erfindungsgemässen Verfahrens wird der abgezogene Teil des isolierenden Mantels des elektrischen Kabels mittels Druckluft und/oder mittels eines Auswerfstifts von den Klemmbacken getrennt. Dadurch kann der abgezogene Teil des isolierenden Mantels von den Klemmbacken einfach entfernt werden.

Die vorliegende Anmeldung bezieht sich auch auf eine nicht unter den Schutzumfang der Ansprüche fallende, aber als das Verständnis der Erfindung erleichternd angesehene Vorrichtung zur Unterstützung der Entfernung einer Schirmfolie eines elektrischen Kabels umfassend ein erstes Zahnriemenrad und ein zweites Zahnriemenrad, die koaxial und synchron, jedoch winkelverstellbar zueinander um eine Drehachse drehbar sind, sowie einen mit dem ersten Zahnriemenrad koaxial verbundenen Werkzeugflansch, in dem eine mittige Öffnung angeordnet ist, durch die das Kabel ein- oder durchführbar ist, wobei der Werkzeugflansch ein oder mehrere beweglich angebrachte Werkzeuge umfasst, wobei die Werkzeuge durch das mit dem zweiten Zahnriemenrad verbundene Stellmittel in Bezug auf die gemeinsame Drehachse des ersten Zahnriemenrads und des zweiten Zahnriemenrads bewegbar sind wobei der radiale Abstand der Werkzeuge zur gemeinsamen Drehachse des ersten Zahnriemenrads und des zweiten Zahnriemenrads durch eine Winkelverdrehung zwischen dem ersten Zahnriemenrad und dem zweiten Zahnriemenrad, welche durch ein gemeinsames Antriebsmittel angetrieben sind, einstellbar ist.

Mit einer solchen Vorrichtung ist es möglich, den radialen Abstand der Werkzeuge, die ein Kabel schneiden, zentrieren oder halten, in Bezug auf die Drehachse der Vorrichtung nur mit einer Winkelverdrehung zwischen dem ersten Zahnriemenrad und dem zweiten Zahnriemenrad präzis einzustellen. Darüber hinaus benötigt diese Vorrichtung nur ein Antriebsmittel für das synchrone Antreiben des ersten Zahnriemenrads und des zweiten Zahnriemenrads. Im Gegensatz zu bekannten Vorrichtungen besteht also kein Risiko, dass die Zahnriemenräder mit der Zeit nicht mehr synchron drehen, was zum Beispiel zu ungenauen Einschnittdurchmessern führen würde.

In einer bevorzugten Ausführungsform umfasst die Vorrichtung ein drittes Zahnriemenrad und ein viertes Zahnriemenrad, welche durch das Antriebsmittel antreibbar sind, wobei das erste Zahnriemenrad durch das dritte Zahnriemenrad über einen ersten Zahnriemen und das zweite Zahnriemenrad durch das vierte Zahnriemenrad über einen zweiten Zahnriemen antreibbar sind. Dadurch ist es einfach, das erste Zahnriemenrad und das zweite Zahnriemenrad synchron drehen zu lassen. Es ist auch möglich, die Vorrichtung sehr kompakt und platzsparend zu bauen. Darüber hinaus ist es dadurch möglich, das dritte Zahnriemenrad und das vierte Zahnriemenrad entweder koaxial oder nicht koaxial anzuordnen. Das genaue Baudesign der Vorrichtung kann somit sehr flexibel gewählt werden.

In einer weiteren bevorzugten Ausführungsform umfasst die Vorrichtung mindestens eine Umlenkrolle und eine Spannrolle, welche den zweiten Zahnriemen umlenken, vorzugsweise taillieren, wobei durch eine Positionsveränderung der Umlenkrolle und/oder der Spannrolle die Winkelverdrehung zwischen dem ersten Zahnriemenrad und dem zweiten Zahnriemenrad bewirkbar ist. Dadurch ist es möglich, lediglich mit einer Positionsveränderung der Umlenkrolle und/oder der Spannrolle, zum Beispiel eine rein translatorische Bewegung, die Winkelverdrehung zwischen dem ersten Zahnriemenrad und dem zweiten Zahnriemenrad zu bewirken und so die Position der Werkzeuge in Bezug auf die Drehachse der Vorrichtung zu ändern. Die Vorrichtung kann somit sehr kompakt gebaut werden.

In einer weiteren bevorzugten Ausführungsform sind das dritte Zahnriemenrad und das vierte Zahnriemenrad vereint. Dies stellt ein noch einfacheres Baudesign der Vorrichtung dar.

In einer anderen bevorzugten Ausführungsform umfasst die Vorrichtung einen unter Spannung gehaltenen Umlenkriemen, der das dritte Zahnriemenrad und das vierte Zahnriemenrad verbindet, sowie eine erste bewegbare Umlenkrolle, die entlang dem Umlenkriemen zwischen dem dritten Zahnriemenrad und dem vierten Zahnriemenrad angeordnet ist und den Umlenkriemen umlenkt, wobei durch eine Positionsveränderung der ersten bewegbaren Umlenkrolle die Winkelverdrehung zwischen dem ersten Zahnriemenrad und dem zweiten Zahnriemenrad bewirkbar ist. Dadurch ist es möglich, lediglich mit einer Positionsveränderung der ersten bewegbaren Umlenkrolle, zum Beispiel mit einer rein translatorischen Bewegung, die Winkelverdrehung zwischen dem ersten Zahnriemenrad und dem zweiten Zahnriemenrad zu bewirken und so die Position der Werkzeuge in Bezug auf die Drehachse der Vorrichtung zu ändern. Dank der Position der ersten bewegbaren Umlenkrolle zwischen dem dritten Zahnriemenrad und dem vierten Zahnriemenrad ist die Spannung des ersten Zahnriemens oder des zweiten Zahnriemens nicht von der Position der Umlenkrolle abhängig. Dadurch kann die Zustellung der Werkzeuge präziser erfolgen und die Winkelverdrehung zwischen dem ersten Zahnriemenrad und dem zweiten Zahnriemenrad kann grösser ausgelegt werden.

In einer anderen bevorzugten Ausführungsform ist das Zentrum der ersten bewegbaren Umlenkrolle stets auf der Mittelsenkrechten zwischen dem Zentrum des dritten Zahnriemenrads und dem Zentrum des vierten Zahnriemenrads angeordnet, und der Durchmesser der ersten bewegbaren Umlenkrolle entspricht dem peripheren Abstand zwischen dem dritten Zahnriemenrad und dem vierten Zahnriemenrad. Mit einer solchen Anordnung verläuft der Abschnitt des Umlenkriemens zwischen dem dritten Zahnriemenrad und der ersten bewegbaren Umlenkrolle parallel zum Abschnitt des Umlenkriemens zwischen der ersten bewegbaren Umlenkrolle und dem vierten Zahnriemenrad. Dadurch gibt es einen linearen Zusammenhang zwischen dem Betrag der Positionsveränderung der ersten bewegbaren Umlenkrolle und der Winkelverdrehung zwischen dem ersten Zahnriemenrad und dem zweiten Zahnriemenrad.

In einer anderen bevorzugten Ausführungsform umfasst die Vorrichtung mindestens eine erste nichtbewegbare Umlenkrolle und eine zweite nichtbewegbare Umlenkrolle sowie eine zweite bewegbare Umlenkrolle, die mit der ersten bewegbaren Umlenkrolle auf einem Schlitten angebracht ist, wobei die zweite bewegbare Umlenkrolle entlang dem Umlenkriemen zwischen der ersten nichtbewegbaren Umlenkrolle und der zweiten nichtbewegbaren Umlenkrolle angeordnet ist und den Umlenkriemen umlenkt und wobei durch eine translatorische Bewegung des Schlittens die Winkelverdrehung zwischen dem ersten Zahnriemenrad und dem zweiten Zahnriemenrad bewirkbar ist.

Mit einem solchen Mechanismus ist es möglich, mit einer rein translatorischen Bewegung des Schlittens die Winkelverdrehung zwischen dem ersten Zahnriemenrad und dem zweiten Zahnriemenrad zu bewirken und dadurch die Position der Werkzeuge in Bezug auf die Drehachse der Vorrichtung zu ändern. Dieser Mechanismus hat weiter den Vorteil, dass der Umlenkriemen unabhängig von der Position der ersten bewegbaren Umlenkrolle immer unter der gleichen Spannung gehalten wird. Dies ermöglicht eine präzisere Zustellung der Werkzeuge und verhindert, dass der Umlenkriemen wegen einer zu hohen Spannung beschädigt wird.

In einer weiteren bevorzugten Ausführungsform umfasst die Vorrichtung einen zweiten Motor, mit dem die Positionsveränderung der Umlenkrolle antreibbar ist, wodurch die Winkelverdrehung zwischen dem ersten Zahnriemenrad und dem zweiten Zahnriemenrad bewirkbar ist. Dadurch kann die Positionsänderung schnell, präzis und reproduzierbar erfolgen. Falls der zweite Motor mittels Computer kontrolliert wird, kann dies automatisch und mit hoher Geschwindigkeit erfolgen.

In einer anderen bevorzugten Ausführungsform umfasst die Vorrichtung ein Planetengetriebe mit Hohlrad, Planetenrädern und Sonnenrad, wobei das Kreisen der Planetenräder um das Sonnenrad durch die Drehung des vierten Zahnriemenrads antreibbar ist, wobei durch das Kreisen der Planetenräder um das Sonnenrad eine Welle antreibbar ist, die mit dem dritten Zahnriemenrad verbunden ist, wobei das Sonnenrad drehbar um eine gemeinsame Drehachse des dritten Zahnriemenrads und des vierten Zahnriemenrads angebracht ist, und wobei die Winkelverdrehung zwischen dem ersten Zahnriemenrad und dem zweiten Zahnriemenrad durch eine Drehung des Sonnenrads bewirkbar ist.

Mit diesem Mechanismus kann die Winkelverdrehung zwischen dem ersten Zahnriemenrad und dem zweiten Zahnriemenrad und dementsprechend die Einstellung der Position der Werkzeuge durch eine Drehbewegung bewirkt werden. Dadurch kann eine Drehung des Sonnenrads in eine der gemeinsamen Rotation des ersten Zahnriemenrads und des zweiten Zahnriemenrads überlagerte Winkelverdrehung zwischen dem ersten Zahnriemenrad und dem zweiten Zahnriemenrad "übersetzt" werden. Diese Übersetzung der Winkelverdrehung ist unabhängig von der Rotationsgeschwindigkeit des ersten Zahnriemenrads und des zweiten Zahnriemenrads. Es ermöglicht eine besonders einfache und präzise Zustellung der Messer.

In einer weiteren bevorzugten Ausführungsform umfasst die Vorrichtung einen zweiten Motor, mit dem die Drehung des Sonnenrads antreibbar ist, durch welche die Winkelverdrehung zwischen dem ersten Zahnriemenrad und dem zweiten Zahnriemenrad ermöglicht wird. Mit dem zweiten Motor kann die Positionsänderung reproduzierbar, schnell und präzis erfolgen. Falls der Motor mit einem Computer kontrolliert wird, kann dies auch voll automatisch erfolgen.

In einer weiteren bevorzugten Ausführungsform umfasst die Vorrichtung ein drittes Zahnriemenrad und ein fünftes Zahnriemenrad, welche durch das Antriebsmittel antreibbar sind, wobei das erste Zahnriemenrad durch das dritte Zahnriemenrad über einen ersten Zahnriemen und das zweite Zahnriemenrad durch das fünfte Zahnriemenrad über einen zweiten Zahnriemen antreibbar sind, sowie ein Planetengetriebe mit Planetenrädern und einem mit dem fünften Zahnriemenrad verbundenen und antreibbaren Sonnenrad, wobei das Planetengetriebe innerhalb eines Hohlkörpers mit innerer Verzahnungangeordnet ist, wobei durch das Kreisen der Planetenräder um das Sonnenrad eine Welle antreibbar ist, die mit den Planetenrädern und dem dritten Zahnriemenrad verbunden ist, und wobei die Winkelverdrehung zwischen dem ersten Zahnriemenrad und dem zweiten Zahnriemenrad durch eine Drehung des Hohlkörpers bewirkbar ist.

Mit dieser Ausführungsform kann die Winkelverdrehung zwischen dem ersten Zahnriemenrad und dem zweiten Zahnriemenrad und dementsprechend die Einstellung der Position der Werkzeuge durch eine Drehbewegung des Hohlkörpers bewirkt werden. Es ermöglicht eine besonders einfache und präzise Zustellung der Messer.

In einer anderen bevorzugten Ausführungsform sind die Werkzeuge gleichmässig auf dem Werkzeugflansch angeordnet. Dies gewährleistet ein präzises Schneiden, Zentrieren oder Halten eines Kabels.

In einer weiteren bevorzugten Ausführungsform sind die Werkzeuge schwenkbar um Schwenkstifte auf dem Werkzeugflansch angebracht. Dadurch kann der Werkzeugflansch kompakt gebaut werden und die Stellmittel, mit welchen die Werkzeuge zugestellt werden, die Form von einfachen Stellstiften annehmen.

In einer weiteren bevorzugten Ausführungsform sind die Werkzeuge radial verschiebbar auf dem Werkzeugflansch angebracht. Dadurch kann das Stellmittel die Form eines Spiralflansches annehmen.

In einer anderen bevorzugten Ausführungsform ist die Winkelverdrehung zwischen dem ersten Zahnriemenrad und dem zweiten Zahnriemenrad mittels elektronischen Mitteln steuerbar. Dadurch kann die Zustellung der Messer voll automatisch erfolgen.

In einer weiteren bevorzugten Ausführungsform sind die Werkzeuge Messer. Dadurch kann ein Kabel schnell und präzis bearbeitet, z.B. abisoliert werden.

In einer anderen bevorzugten Ausführungsform umfasst die Vorrichtung Detektionsmittel, mit welchen eine Berührung zwischen den Messern und dem elektrischen Leiter des zu bearbeitenden Kabels detektierbar ist. Dadurch kann detektiert werden, ob die Messer den elektrischen Leiter des Kabels berühren. Somit kann sichergestellt werden, dass die Messer den elektrischen Leiter nicht "verletzen". Mit einer solchen Berührungsdetektion kann die Einschnitttiefe für folgende Bearbeitungen optional laufend mit statistischen Methoden angepasst werden, oder die Schnittregelung greift aufgrund einer Berührungsdetektion schnell genug in den aktuellen Einschnittvorgang ein, noch bevor eine Schädigung des Leiters entstanden ist.

Die Berührungsdetektion kann auch dazu verwendet werden, um vor der Produktion mit Probe-Einschnitten bis zur Messer-Leiter-Berührung mit statistischen Methoden den optimalen Produktions-Einschnitt und Abzugsdurchmesser zu bestimmen.

Zudem kann das Detektionsmittel zur Steuerung der Einschnittposition oder Abzugslänge verwendet werden, indem bei anfänglich geschlossenen Messern das Kabel von Hand oder automatisch bis zur Berührung mit den Messern gebracht wird, worauf sich der Kabelhalter schliesst, sich die Messer öffnen und der Kabelhalter das Kabel in Bearbeitungsposition bringt.

### Kurze Beschreibung der Zeichnungen

Figur 1a zeigt eine schematische Querschnittansicht eines aus dem Stand der Technik bekannten elektrischen Kabels, das eine zu entfernende Schirmfolie aufweist.
Figur 1b zeigt schematische Seitenansicht eines aus dem Stand der Technik bekannten elektrischen Kabels, in welcher eine Sollbruchstelle in der zu entfernenden Schirmfolie erzeugt wurde.
Figur 2 zeigt ein Blockdiagramm einer ersten bevorzugten Ausführungsform des erfindungsgemässen Verfahrens;
Figur 3 zeigt ein Blockdiagramm einer zweiten bevorzugten Ausführungsform des erfindungsgemässen Verfahrens;
Figur 4 zeigt ein Blockdiagramm einer dritten bevorzugten Ausführungsform des erfindungsgemässen Verfahrens;
Figur 5 zeigt eine perspektivische Ansicht einer ersten Ausführungsform einer nicht beanspruchten Vorrichtung zur Unterstützung der Entfernung einer Schirmfolie;
Figur 6 zeigt eine Vorderansicht einer ersten Ausführungsform einer nicht beanspruchten Vorrichtung zur Unterstützung der Entfernung einer Schirmfolie;
Figur 7 zeigt eine perspektivische Schnittansicht einer ersten Ausführungsform einer nicht beanspruchten Vorrichtung zur Unterstützung der Entfernung einer Schirmfolie;
Figur 8a zeigt den Messerflansch mit den Messern in völlig geschlossener Position;
Figur 8b zeigt den Messerflansch mit den Messern in einer mittleren Position;
Figur 8c zeigt den Messerflansch mit den Messern in völlig offener Position;
Figur 9 zeigt eine perspektivische Ansicht einer zweiten Ausführungsform einer nicht beanspruchten Vorrichtung zur Unterstützung der Entfernung einer Schirmfolie;
Figur 10 zeigt eine perspektivische Schnittansicht einer zweiten Ausführungsform einer nicht beanspruchten Vorrichtung zur Unterstützung der Entfernung einer Schirmfolie;
Figur 11 zeigt eine perspektivische Ansicht einer dritten Ausführungsform einer nicht beanspruchten Vorrichtung zur Unterstützung der Entfernung einer Schirmfolie;
Figur 12 zeigt eine perspektivische Schnittansicht einer dritten Ausführungsform einer nicht beanspruchten Vorrichtung zur Unterstützung der Entfernung einer Schirmfolie;
Figur 13 zeigt eine perspektivische Ansicht einer nicht beanpsruchten Abziehvorrichtung für das Abziehen der zu entfernenden Schirmfolie;
Figur 14 zeigt eine Schnittansicht einer nicht beanspruchten Abziehvorrichtung für das Abziehen der zu entfernenden Schirmfolie; und
Figur 15 zeigt eine perspektivische Schnittansicht der Klemmbacken einer nicht beanspruchten Abziehvorrichtung für das Abziehen der zu entfernenden Schirmfolie.

### Bevorzugte Ausführungsformen der Erfindung

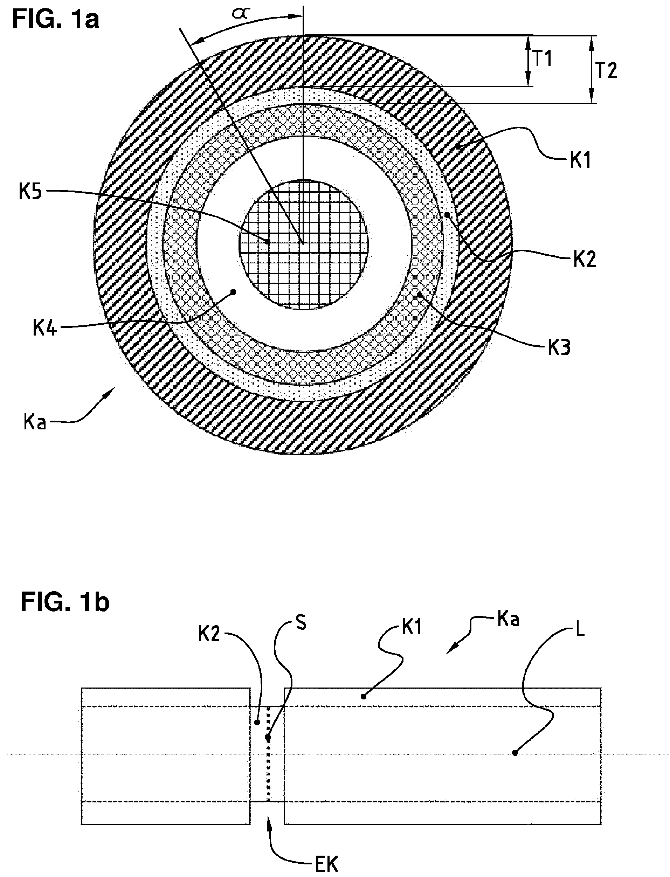

Figur 1a zeigt exemplarisch eine Schnittansicht eines aus dem Stand der Technik bekannten elektrischen Kabels Ka umfassend eine zu entfernende Schirmfolie K2. Neben der Schirmfolie K2 weist das Kabel Ka noch einen isolierenden Mantel K1, ein Schirmgeflecht K3, ein Dielektrikum K4 und einen Innenleiter K5 auf. Die Tiefe T1 entspricht zirka der Dicke des isolierenden Mantels K1, die Tiefe T2 deren des isolierenden Mantels K1 und mindestens der Hälfte der Schirmfolie K2.

Figur 1b zeigt eine Seitenansicht eines Kabels Ka mit Längsachse L, in welchem ein Einschnitt EK im isolierenden Mantel K1 eingeschnitten und eine Sollbruchstelle S in der Schirmfolie K2 erzeugt wurden. Wie die Sollbruchstelle S erzeugt wird, wird nachfolgend erläutert und stellt einen Teilaspekt der vorliegenden Erfindung dar.

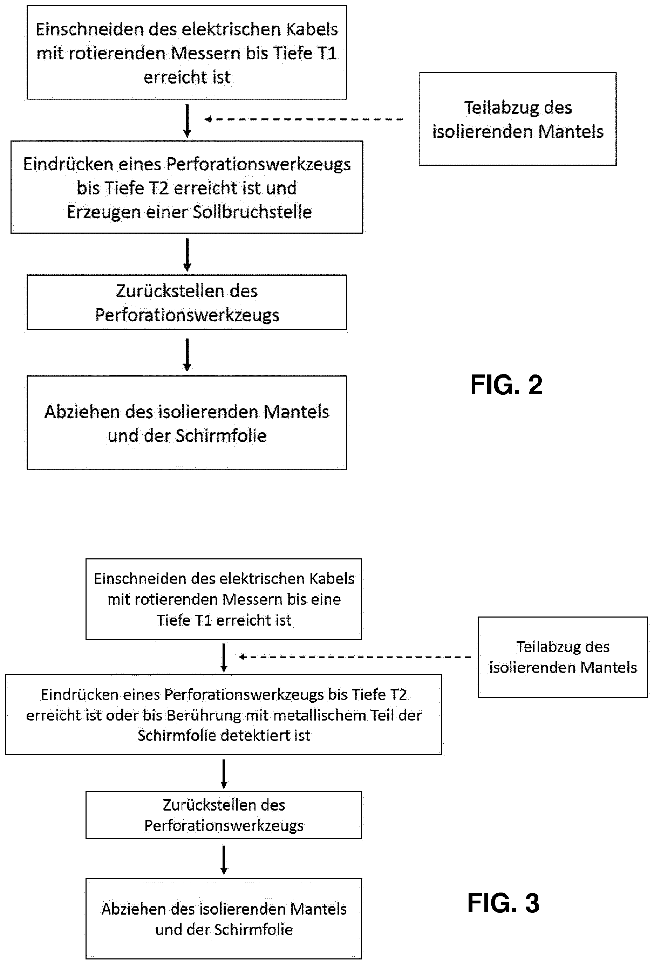

Figur 2 zeigt ein Blockdiagramm eines Verfahrens zur Entfernung einer Schirmfolie eines elektrischen Kabels gemäss einer ersten Ausführungsform der vorliegenden Erfindung. Das Verfahren fängt mit Schritt a an, mit dem Einschneiden eines Einschnitts EK im isolierenden Mantel K1 des elektrischen Kabels mit den rotierenden Messern einer rotativen Abisoliermaschine, bis eine Tiefe T1 erreicht ist. Ziel dieses ersten Schrittes ist ein Einschnitt EK im isolierenden Mantel K1 des elektrischen Kabels Ka, ohne dass die Schirmfolie K2 eingeschnitten wird. Ein Einschneiden der dünnen Schirmfolie mit rotierenden Messern würde meist auch zu Verletzungen der darunterliegenden Schicht führen. Um sicher zu stellen, dass die Schirmfolie im Schritt a nicht eingeschnitten wird, wird das Einschneiden mit rotierenden Messern bis zu einer Tiefe T1 durchgeführt, die kleiner als oder gleich der Dicke des isolierenden Mantels K1 ist.

In einem zweiten Verfahrensschritt b, wird eine Sollbruchstelle mit einem nicht rotierenden Perforationswerkzeug in der Schirmfolie K2 erzeugt. Dafür wird das Perforationswerkzeug im Einschnitt EK eingedrückt, bis eine Tiefe T2 erreicht ist, die der Dicke des isolierenden Mantels und mindestens der Hälfte der Dicke der Schirmfolie entspricht. Das Eindrücken des nicht rotierenden Perforationswerkzeugs in die Schirmfolie genügt, um mindestens eine Sollbruchstelle S in der Schirmfolie K2 zu erzeugen. Vorteilhafterweise ist das Perforationswerkzeug ein Messer der im Schritt a gebrauchten Abisoliervorrichtung. Zu beachten ist, dass im Schritt b die Messer der Abisoliervorrichtung nicht drehen. Das Perforationswerkzeug kann aber auch ein anderes dafür geeignetes Werkzeug sein, wie zum Beispiel eine Nadel. Mit einer genauen Justierung der Eindruckstiefe in Schritt b kann gewährleistet werden, dass das Schirmgeflecht K3 unter der Schirmfolie K2 nicht verletzt wird.

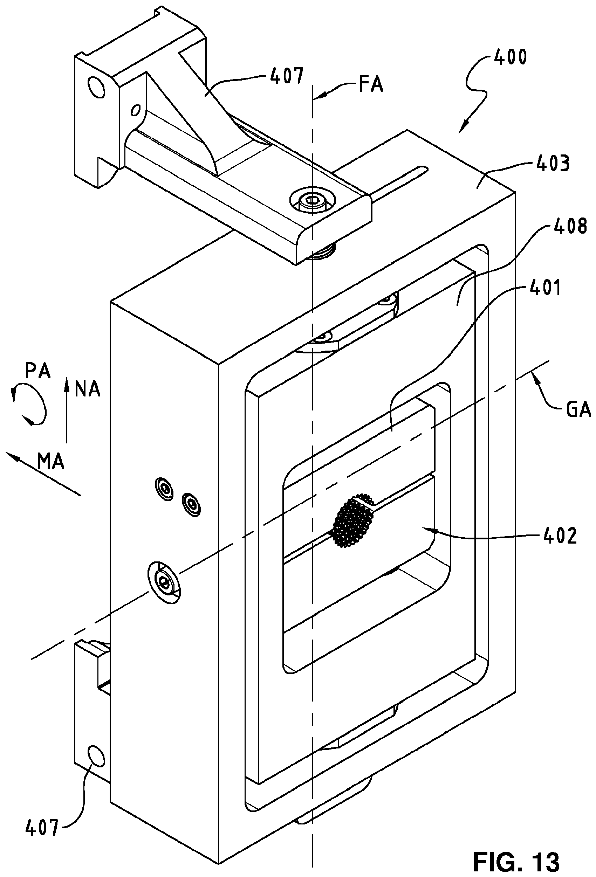

Im Schritt c wird die Schirmfolie K2 an der Sollbruchstelle S abgerissen. Im Schritt d wird die Schirmfolie K2 abgezogen, vorzugsweise zusammen mit dem isolierenden Mantel K1. Wie in Figur 2 angedeutet, kann zwischen den Schritten a und b ein Teil- oder Vollabzug des isolierenden Mantels K1 vorgenommen werden. Die Schritte c und d können entweder manuell oder mittels einer dafür vorgesehenen Abziehvorrichtung (siehe Figuren 13 bis 15) durchgeführt werden.

Figur 3 zeigt ein Blockdiagramm eines Verfahrens zur Entfernung einer Schirmfolie eines elektrischen Kabels gemäss einer zweiten Ausführungsform der vorliegenden Erfindung. Für die Durchführung dieses Verfahrens wird vorzugsweise eine rotative Abisoliervorrichtung umfassend Mitteln zur Detektion einer Berührung der Messer mit einem leitfähigen Gegenstand gebraucht. Dadurch kann das Erzeugen einer Sollbruchstelle in der Schirmfolie durch das kontinuierliche Zustellen der nicht rotierenden Messer der Abisoliervorrichtung durchgeführt werden, bis die Tiefe T2 erreicht ist oder bis eine Berührung eines Messers mit der Schirmfolie oder mit dem Schirmgeflecht detektiert wird. Die Möglichkeit der Detektion einer Berührung der Messer mit der Schirmfolie oder mit dem Schirmgeflecht gewährleistet, dass das Schirmgeflecht durch das Erzeugen der Sollbruchstelle nicht verletzt wird. In dieser Ausführungsform kann auch zwischen dem ersten und dem zweiten Schritt ein Teilabzug des isolierenden Mantels vorgesehen werden. Es ist auch möglich, dass die Messer nach der Detektion einer Berührung mit der Schirmfolie weiter in Richtung des Innenleiters des Kabels zugestellt werden. Dadurch kann sichergestellt werden, dass auch in den Regionen, in welchen die Schirmfolie überlappend ist, eine Sollbruchstelle erzeugt wird.

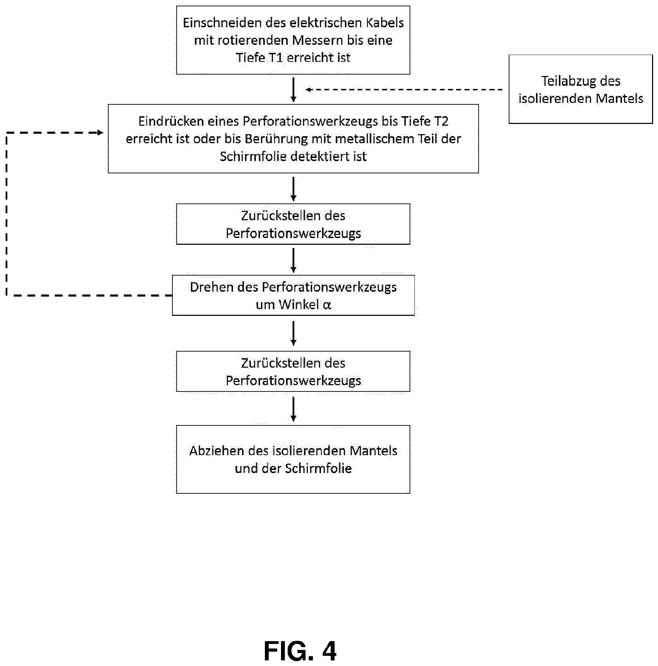

Figur 4 zeigt ein Blockdiagramm eines Verfahrens zur Entfernung einer Schirmfolie eines elektrischen Kabels gemäss einer dritten Ausführungsform der vorliegenden Erfindung. In diesem Verfahren werden, nachdem eine Sollbruchstelle in der Schirmfolie mit einer bestimmten Winkellage der Messer der Abisoliervorrichtung durchgeführt wurde, die Messer zurückgestellt, sodass sie die Schirmfolie nicht mehr berühren, und anschliessend um ein Winkel α gedreht. In dieser neuen Winkellage werden dann die Messer wieder in die Schirmfolie eingedrückt. Es können mehre solche Verstellvorgänge der Winkellage der Werkzeuge mit anschliessendem Eindrücken der Schirmfolie vorgesehen werden. Nachdem die Schirmfolie mindestens zweimal eingedrückt wurde, werden der Mantel und die Schirmfolie abgezogen. Durch das Eindrücken der Schirmfolie mit den Messern in unterschiedlichen Winkellagen kann sichergestellt werden, dass eine Sollbruchstelle entlang dem ganzen Umfang des Kabels erzeugt wird. Auch in dieser dritten Ausführungsform kann nach dem rotativen Einschneiden des isolierenden Mantels ein Teilabzug oder ein Vollabzug vorgenommen werden.

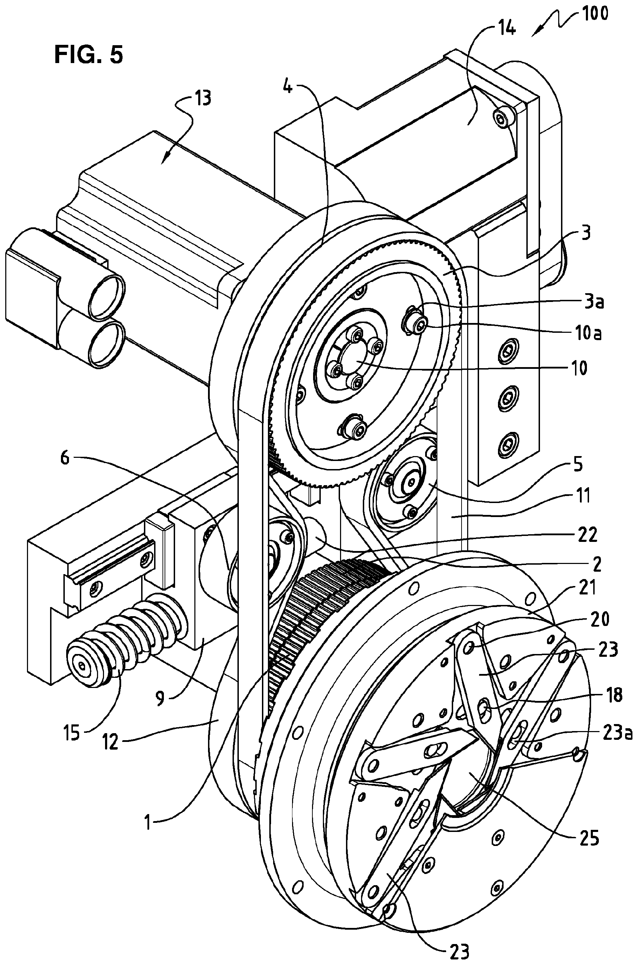

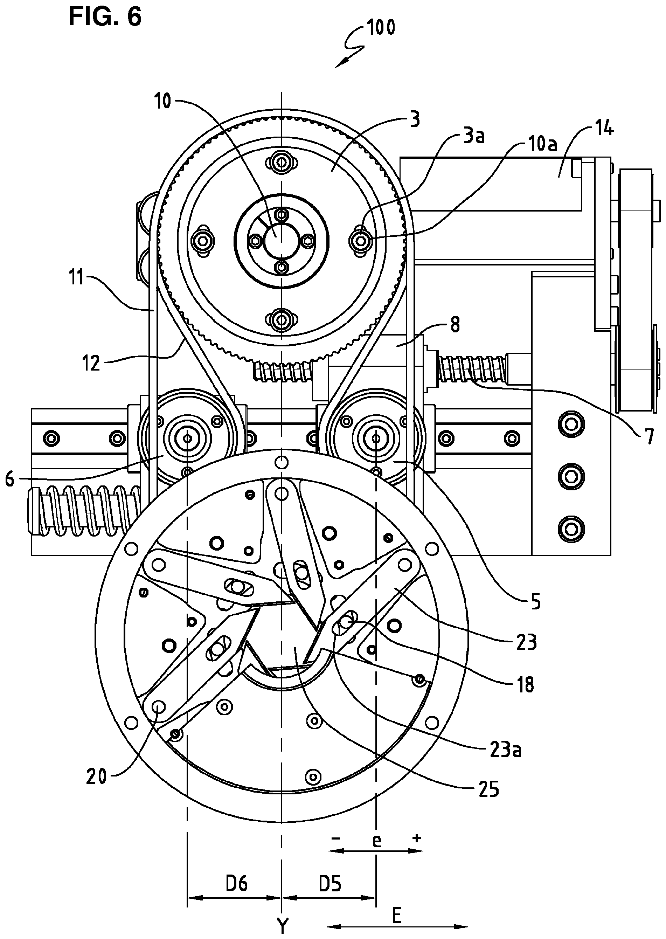

Figur 5 zeigt eine perspektivische Ansicht und Figur 6 eine Vorderansicht einer ersten Ausführungsform einer nicht unter den Schutzumfang der Ansprüche fallenden Vorrichtung 100 zur Unterstützung der Entfernung einer Schirmfolie eines elektrischen Kabels. In dieser Ausführungsform werden ein drittes Zahnriemenrad 3 und ein viertes Zahnriemenrad 4 mit derselben Antriebswelle 10 von einem gemeinsamen Antriebsmittel, hier von einem ersten Motor 13, angetrieben. Zahnriemenräder 3 und 4 sind mittels Schrauben 10a verschraubt und drehen daher synchron. Zahnriemenrad 3 verfügt über Langlöcher 3a, was für eine relative Winkelverdrehung der Zahnriemenräder 3 und 4 zur Justierung der Messeröffnung benutzt werden kann.

Das dritte Zahnriemenrad 3 treibt über einen ersten Zahnriemen 11 ein erstes Zahnriemenrad 1 an, und das vierte Zahnriemenrad 4 treibt über einen zweiten Zahnriemen 12 ein zweites Zahnriemenrad 2 an. Das erste Zahnriemenrad 1 und das zweite Zahnriemenrad 2 drehen somit koaxial und synchron. Das erste Zahnriemenrad 1 und das zweite Zahnriemenrad 2 sind jedoch winkelverstellbar zueinander drehbar montiert. Das erste Zahnriemenrad 1 und das zweite Zahnriemenrad 2 definieren eine Öffnung A, durch die ein Kabel mit einer zu entfernender Schirmfolie ein- oder durchführt werden kann.

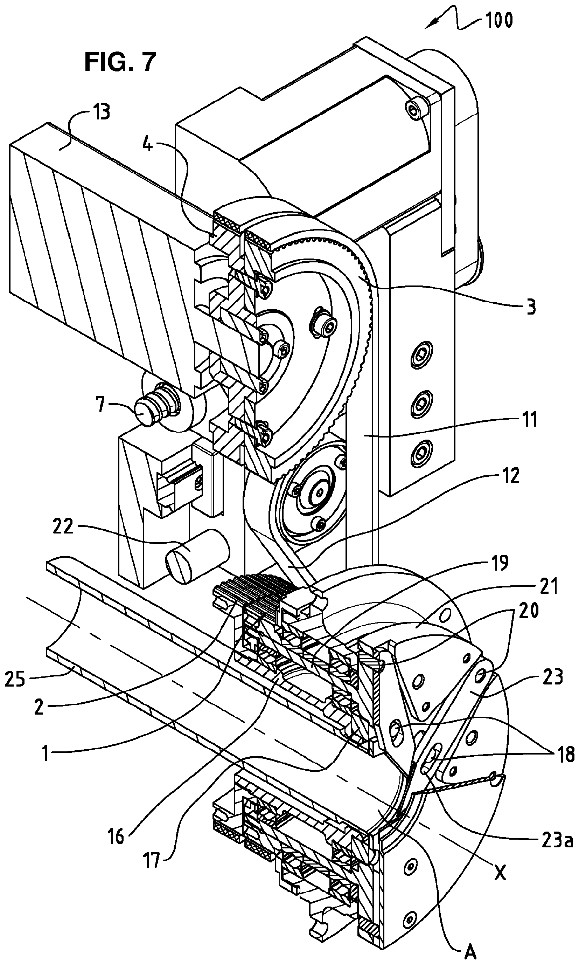

Anhand der Figur 7 ist ersichtlich, dass das zweite Zahnriemenrad 2 über eine Lagerhülse 16 und über einen Stellring 17 mit Stellstiften 18 verbunden ist. Das erste Zahnriemenrad 1 ist über einen Rotor 19 mit den Schwenkstiften 20 verbunden. Mit dem Rotor 19 verbunden ist auch ein Werkzeugflansch 21, hier ein Messerflansch, an welchem Werkzeuge 23, hier sind es Messer, um die Schwenkstifte 20 schwenkbar angebracht sind. Die Stellstifte 18 sind derart angeordnet, dass sie in die Messeröffnungen 23a eingreifen und somit sich die Messer 23 um die Schwenkstifte 20 schwenken lassen. Über die Winkelverdrehung zwischen dem ersten Zahnriemenrad 1 und dem zweiten Zahnriemenrad 2 kann somit ein gewünschter Messer-Schwenk-Winkel λ und. Schneiddurchmesser *Df* eingestellt werden.

Wie in den Figuren 5 bis 7 zu sehen ist, wird der zweite Zahnriemen 12 von einer Umlenkrolle 5 und einer Spannrolle 6 tailliert. Die Umlenkrolle 5 kann, in dieser Ausführungsform, durch einen zweiten Motor 14 über Spindel 7 und über einen ersten Schlitten 8 translatorisch verschoben werden. Ein zweiter Schlitten 9 ist über Federbolzen 22 und Feder 15 mit dem ersten Schlitten 8 verbunden.

Wie in Figur 6 dargestellt, wird die Symmetriestellung der Vorrichtung 100 definiert als die Stellung, bei welcher der Abstand D5 der Umlenkrolle 5 zur Symmetrieachse Y gleich dem Abstand D6 der Spannrolle 6 zur Symmetrieachse Y ist. Durch Lösen der Schrauben 10a und Drehen des vierten Zahnriemenrads 4 relativ zum dritten Zahnriemenrad 3 kann ein Drehen des ersten Zahnriemenrads 1 relativ zum zweiten Zahnriemenrad 2 bewirkt werden, ohne dass ein Verschieben der Umlenkrolle 5 nötig ist. Damit drehen die Stellstifte 18 um die Drehachse X und schwenken die Messer 23. Dadurch kann die Position der Messer 23 in der Symmetriestellung einfach eingestellt werden.

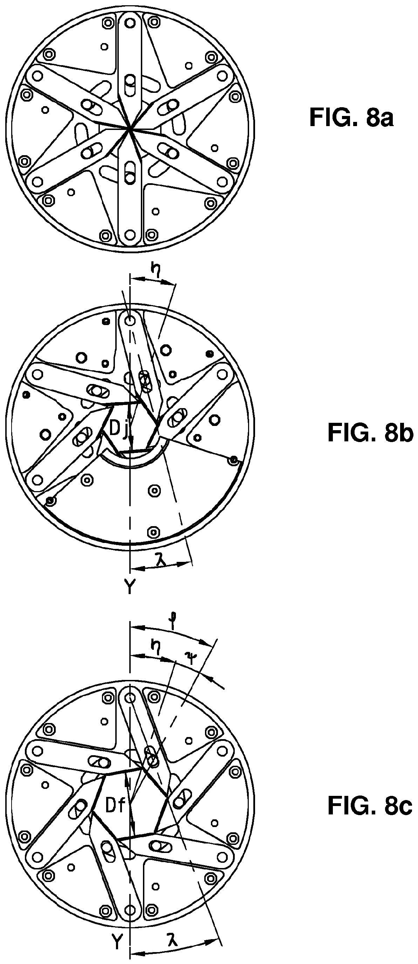

Figur 8a zeigt die Messer in der Position mit dem kleinsten Schneiddurchmesser *Df*.

Figur 8b zeigt die Messer in Justier-Position, die erreicht wird, indem in der Symmetriestellung durch Lösen der Schrauben 10a und Drehen des vierten Zahnriemenrads 4 relativ zum dritten Zahnriemenrad 3 das Drehen des zweiten Zahnriemenrads 2 relativ zum ersten Zahnriemenrad 1 und somit das Schliessen der Messer auf einen Justier-Schneid-Durchmesser Dj bewirkt wird. Die Stellstifte 18 sind in dieser Stellung bezüglich der Symmetrieachse Y um einen sogenannten Stellring-Justier-Winkel η gedreht, der in der Folge als Basis für den geometrischen Zusammenhang von Schneid-Durchmesser Df und Umlenkrollenverschiebung *e* dient.

Wird nun gemäss Figur 6 der erste Schlitten 8 mit der Umlenkrolle 5 von der Symmetriestellung nach rechts und entlang Richtung E verschoben, wird auch der zweite Schlitten 9 mit der Spannrolle 6 über den Federbolzen 22 und Feder 15 nach rechts verschoben, sodass die Spannrolle 6 an den zweiten Zahnriemen 12 gedrückt wird. Die horizontale Verschiebung *e* der Umlenkrolle 5 in Bezug auf die Symmetriestellung nach rechts bewirkt eine Verdrehung des zweiten Zahnriemenrads 2 relativ zum ersten Zahnriemenrad 1. Da der Stellring und die Stellstiften 18 mit dem zweiten Zahnriemenrad 2 verbunden sind, werden die Stellstifte 18 um einen sogenannten Stellring-Verdreh-Winkel ψ bezüglich des Werkzeugflansches und den Schwenkstiften verdreht. Wie in Figur 8c gezeigt, addiert sich dieser Stellring-Verdreh-Winkel ψ zum Stellring-Justier-Winkel η zum Stellring-Gesamt-Winkel ϕ. Die Messer 23 werden durch die Stellstifte 18 geschwenkt und aus diesem Stellring-Gesamt-Winkel ϕ ergibt sich ein Schneid-Durchmesser *Df*. Wichtig zu bemerken ist, dass der Stellring-Verdreh-Winkel ψ unabhängig von der Rotationsgeschwindigkeit der Zahnriemenräder 1,2 ist und dass die Zahnriemenräder 1 und 2 wiederum synchron drehen, sobald der Schneid-Durchmesser *Df* eingestellt wurde. Die Einstellung des Stellring-Verdreh-Winkels ψ stellt dementsprechend lediglich eine Phasenverschiebung zwischen dem ersten Zahnriemenrad 1 und dem zweiten Zahnriemenrad 2 gegenüber dem Stellring-Justier-Winkel η dar.

Es wird hier darauf verzichtet, den genauen mathematischen Zusammenhang zwischen dem Betrag *e* der horizontalen Verschiebung der Umlenkrolle 5 und dem Schneid-Durchmesser *Df* herzuleiten. Ein Fachmann würde ohne Schwierigkeiten diesen Zusammenhang durch trigonometrische Überlegungen herleiten können. Es wird hier lediglich darauf hingewiesen, dass es für jeden Schneid-Durchmesser Df möglich ist, den Zusammenhang zwischen *e* und *Df* herzuleiten.

Wichtig zu beachten ist, dass die Einstellung des Schneid-Durchmessers *Df* mit rotierenden oder mit nicht rotierenden Messern erfolgen kann. Mit der Vorrichtung 100 ist es also möglich die oben beschriebenen Ausführungsformen des erfindungsgemässen Verfahrens präzis durchzuführen und eine sollbruchstelle in einer Schirmfolie zu erzeugen. Darüber hinaus kann die Vorrichtung 100 mittels zur Detektion der Berührung der Werkzeuge mit einem leitfähigen Gegenstand (hier nicht gezeigt), wie zum Beispiel dem metallischen Teil der Schirmfolie oder dem Schirmgeflecht, umfassen. Dadurch kann eine Sollbruchstelle noch präziser erzeugt werden und sichergestellt werden, dass das Schirmgeflecht nicht verletzt wird.

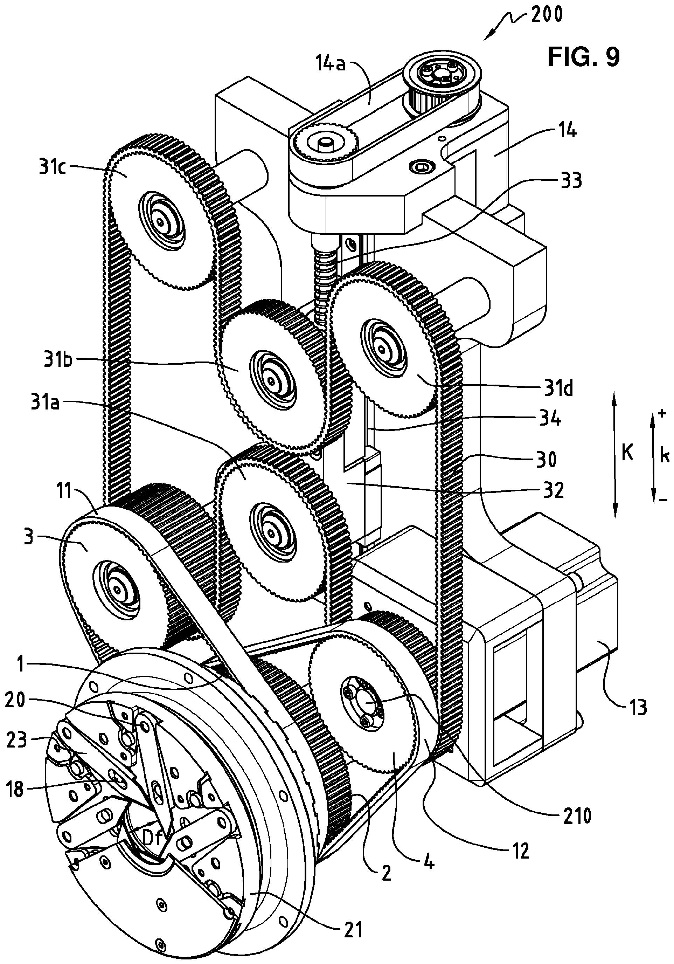

Figur 9 zeigt eine zweite bevorzugte Ausführungsform einer nicht unter den Schutzumfang der Ansprüche fallenden Vorrichtung 200 zur Unterstützung der Entfernung einer Schirmfolie eines elektrischen Kabels. Komponenten, welche die gleiche Funktion wie in der ersten Ausführungsform übernehmen, sind hier mit den gleichen Referenzziffern bezeichnet. Anders als in der Vorrichtung 100, sind die Zahnriemenräder 3 und 4 nicht koaxial angeordnet. Sie sind aber durch den gleichen ersten Motor 13, welcher die Welle 210 rotieren lässt, mit dem Umlenkriemen 30 synchron antreibbar. Wie in der Vorrichtung 100, treibt das dritte Zahnriemenrad 3 über einen ersten Zahnriemen 11 ein erstes Zahnriemenrad 1 an, und das vierte Zahnriemenrad 4 treibt über einen zweiten Zahnriemen 12 ein zweites Zahnriemenrad 2 an. Das erste Zahnriemenrad 1 und das zweite Zahnriemenrad 2 drehen somit synchron. Die Zahnriemenräder 1,2 sind jedoch auch in dieser Ausführungsform winkelverstellbar zueinander drehbar montiert.

Der Umlenkriemen 30 wird mit den nichtbewegbaren Umlenkrollen 31c,31d umgelenkt, wobei die bewegbaren Umlenkrollen 31a und 31b an einem Schlitten 32 angebracht sind, der mittels Spindel 33 und Schiene 34 in Richtung *K* bewegbar ist. Die Spindel 33 wird vom zweiten Motor 14 und Motorriemen 14a angetrieben. Dank diesem Mechanismus kann der Abstand zwischen den Achsen der bewegbaren Umlenkrollen 31a,31b zu den Achsen der nichtbewegbaren Umlenkrollen 31c,31d und zu den Achsen der dritten und vierten Zahnriemenräder 3,4 verstellt werden.

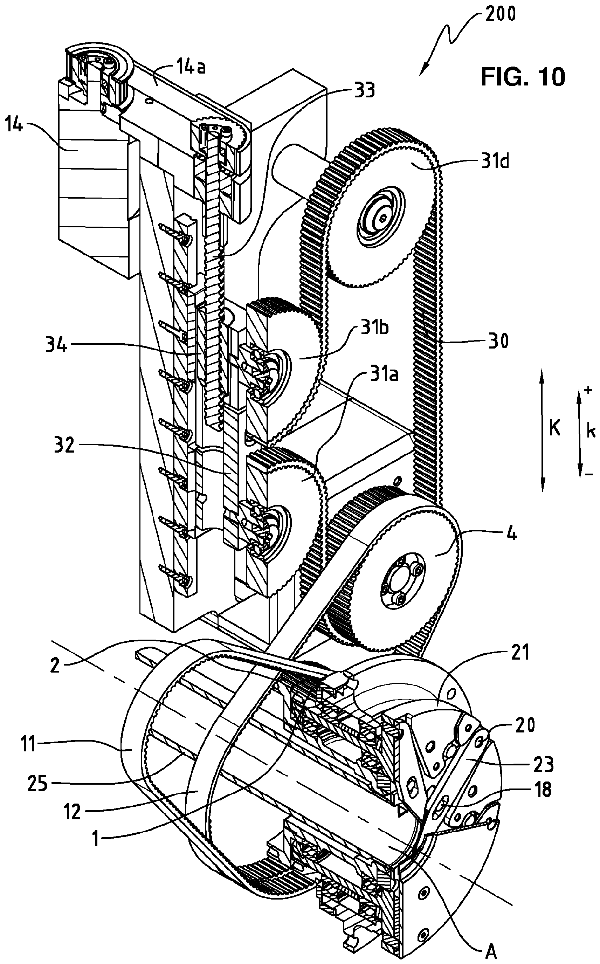

Wie aus Figur 9 leicht zu verstehen ist, bewirkt eine Verschiebung *k* der bewegbaren Umlenkrollen 31a und 31b in Richtung K gegenüber der Justierposition eine Drehung des ersten Zahnriemenrads 1 relativ zum zweiten Zahnriemenrad 2. Da die Stellstifte 18, genau wie in der Vorrichtung 100 und wie in Figur 10 ersichtlich, mit dem zweiten Zahnriemenrad 2 verbunden sind, werden die Stellstifte 18 entsprechend der Verschiebung k um den sogenannten Stellring-Verdreh-Winkel ψ gedreht. Dieser Stellring-Verdreh-Winkel ψ addiert sich mit dem Stellring-Justier-Winkel η zum Stellring-Gesamt-Winkel ϕ, wie in Figur 8c gezeigt. Die Messer 23 werden durch die Stellstifte 18 verschoben, und aus diesem Stellring-Gesamt-Winkel ϕ ergibt sich ein Schneid-Durchmesser *Df*. Wichtig zu bemerken ist, dass der Verdreh-Winkel ψ auch hier unabhängig von der Rotationsgeschwindigkeit der Zahnriemenräder ist und dass die Zahnriemenräder 1 und 2 wiederum synchron drehen, sobald der Schneid-Durchmesser *Df* eingestellt wurde. Die Einstellung des Stellring-Verdreh-Winkels ψ stellt dementsprechend lediglich eine Phasenverschiebung zwischen den Zahnriemenrädern 1,2 gegenüber dem Stellring-Justier-Winkel η dar.

Anders als in der Vorrichtung 100 wird der Stellring-Justier-Winkel η mit der Position des Schlittens 32 eingestellt. Um diese Justierposition herum wird dann der Schlitten entlang der Richtung K verschoben, um über den Stellring-Verdreh-Winkel ψ den Schneiddurchmesser *Df* einzustellen. Ein weiterer Unterschied zwischen Vorrichtung 100 und Vorrichtung 200 besteht im mathematischen Zusammenhang zwischen der Verschiebung *e* der Umlenkrolle 5 oder der Verschiebung k der bewegbaren Umlenkrollen 31a,31b und dem Stellring-Verdreh-Winkel ψ. Während bei der Vorrichtung 100 eine nicht-lineare Beziehung zwischen Umlenkrollenverschiebung *e* und Stellring-Verdreh-Winkel ψ besteht, ergibt sich bei der Vorrichtung 200 ein rein linearer Zusammenhang zwischen der Umlenkrollenverschiebung *k* und dem Stellring-Verdreh-Winkel ψ.

Falls eine der Umlenkrollen 31a,31b als Spannrolle ausgeführt wird, ist das vorzugsweise 31b, da die translatorisch angetriebene Umlenkrolle möglichst nahe dem dritten Zahnriemenrad 3 und dem vierten Zahnriemenrad 4 platziert sein sollte, um Schneiddurchmesserfehler durch Dehnung des Umlenkriemens zu minimieren. Vorteilhafterweise verlaufen die Abschnitte des Umlenkriemens 30 zwischen drittem Zahnriemenrad 3 und bewegbarer Umlenkrolle 31a sowie viertem Zahnriemenrad 4 und bewegbarer Umlenkrolle 31a parallel zueinander.

Es wird auch hier darauf verzichtet, den genauen mathematischen Zusammenhang zwischen *k* und dem Stellring-Verdreh-Winkel ψ herzuleiten. Ein Fachmann könnte ohne Schwierigkeiten diesen Zusammenhang durch trigonometrische Überlegungen herleiten. Genau wie bei der Vorrichtung 100 ist es bei der Vorrichtung 200 möglich, den Zusammenhang zwischen *k* und *Df* herzuleiten.

Wichtig zu bemerken ist, dass die Umlenkrollen 31b, 31c und 31d anders positioniert werden können, als in Figur 9 gezeigt, ohne dass die Funktion der Vorrichtung 200 beeinträchtigt wird. Unabdingbar ist aber, dass diese Rollen die Funktion eines Längenkompensationsmechanismus aufnehmen. Wenn die bewegbare Umlenkrolle 31a bewegt wird, müssen eine oder mehrere der Umlenkrollen 31b, 31c und 31d dementsprechend verschoben werden, sodass die Spannung des Umlenkriemens 30 erhalten bleibt. Insbesondere muss gewährleistet werden, dass die Bewegung der bewegbaren Umlenkrolle 31a nicht dazu führt, dass der Umlenkriemen 30 reisst.

Wichtig zu beachten ist, dass auch hier die Einstellung des Schneid-Durchmessers *Df* mit rotierenden oder mit nicht rotierenden Messern erfolgen kann. Mit der Vorrichtung 200 ist es also möglich die oben beschriebenen Ausführungsformen des erfindungsgemässen Verfahrens präzis durchzuführen und eine sollbruchstelle in einer Schirmfolie zu erzeugen. Darüber hinaus kann die Vorrichtung 200 mittels zur Detektion der Berührung der Werkzeuge mit einem leitfähigen Gegenstand (hier nicht gezeigt), wie zum Beispiel dem metallischen Teil der Schirmfolie oder dem Schirmgeflecht, umfassen. Dadurch kann eine Sollbruchstelle noch präziser erzeugt werden und sichergestellt werden, dass das Schirmgeflecht nicht verletzt wird.

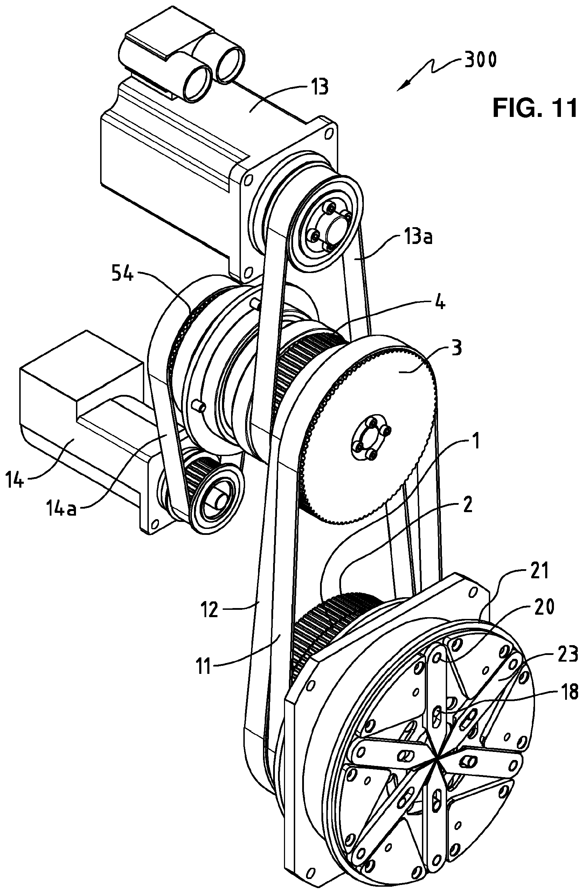

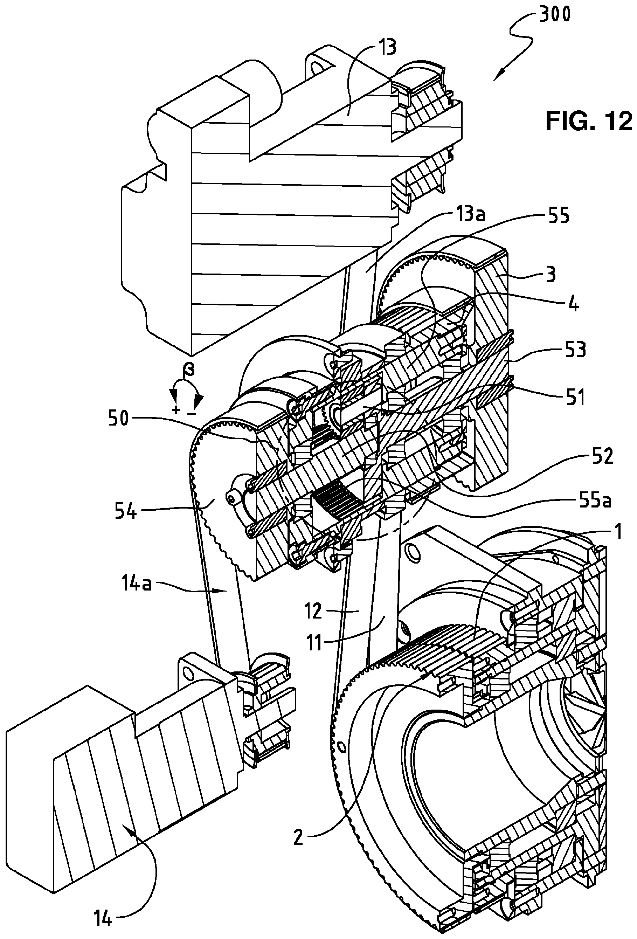

Eine dritte bevorzugte Ausführungsform einer nicht unter den Schutzumfang der Ansprüche fallenden Vorrichtung 300 zur Unterstützung der Entfernung einer Schirmfolie ist in der Figur 11 gezeigt. In dieser Ausführungsform wird die Winkelverdrehung der sonst synchron drehenden Zahnriemenräder 1 und 2, und dadurch die Positionen der Stellstifte 18 gegenüber den Schwenkstiften 20 und somit der Schneiddurchmesser *Df* mit einem Planetengetriebe 50 bewirkt. Der Mechanismus zur Schwenkung der Messer mit Stellstiften 18 ist in dieser Ausführungsform identisch mit demjenigen der ersten und zweiten Ausführungsformen. Wie in Figur 12 ersichtlich, treibt ein erster Motor 13 mit einem ersten Motorzahnriemen 13a das vierte Zahnriemenrad 4 an. Das vierte Zahnriemenrad 4 treibt seinerseits mit dem zweiten Zahnriemen 12 das zweite Zahnriemenrad 2 an. Das dritte Zahnriemenrad 3 treibt mit dem ersten Zahnriemen 11 das erste Zahnriemenrad 1 an.

Wie in Figur 12 ersichtlich, ist das vierte Zahnriemenrad 4 mit einem Hohlkörper 55 verbunden, der über eine innere Verzahnung 55a verfügt. Ferner befindet sich innerhalb des Hohlkörpers 55 und in Verbindung mit der inneren Verzahnung 55a ein Planetengetriebe 50 mit Planetenrädern 51 und Sonnenrad 52. Bei stillstehendem Sonnenrad 52 kreisen die Planetenräder 51 aufgrund der Drehung des vierten Zahnriemenrads 4 und des Hohlkörpers 55 mit seiner inneren Verzahnung 55a um das Sonnenrad 52 in gleicher Drehrichtung wie das vierte Zahnriemenrad 4. Das Kreisen der Planetenräder 51 treibt eine Welle 53 an, die mit dem dritten Zahnriemenrad 3 verbunden ist. Die Zähnezahl beziehungsweise der Durchmesser des dritten Zahnriemenrads 3 ist so gewählt, dass das erste Zahnriemenrad 1 und das zweite Zahnriemenrad 2 bei stillstehendem Sonnenrad synchron drehen.

Mit dem zweiten Motor 14 kann über einen zweiten Motorzahnriemen 14a ein fünftes Zahnriemenrad 54, das mit dem Sonnenrad 52 verbunden ist, angetrieben werden. Die Drehung des fünften Zahnriemenrads 54 um Winkel β bewirkt somit die Drehung des Sonnenrads 52. Ein Drehen des Sonnenrads 52 in gleicher Richtung wie das vierte Zahnriemenrad 4 bewirkt ein schnelleres Kreisen der Planetenräder 51 und somit ein schnelleres Drehen der Welle 53 und des dritten Zahnriemenrads 3. Da das dritte Zahnriemenrad 3 das erste Zahnriemenrad 1 antreibt, wird demzufolge mit einer Verdrehung des Sonnenrads 52 um Winkel β eine Verdrehung der Zahnriemenräder 1,2 und ein Stellring-Verdreh-Winkel ψ bewirkt. Wie in den vorherigen bevorzugten Ausführungsformen bewirkt der oben beschriebene Mechanismus die Phasenverschiebung ψ und die Verstellung der Position der Messer 23. Wichtig zu bemerken ist, dass der Stellring-Verdreh-Winkel ψ auch hier unabhängig von der Rotationsgeschwindigkeit der Zahnriemenräder 1,2 ist und dass die Zahnriemenräder 1 und 2 wiederum synchron drehen, sobald der zweite Motor und das Sonnenrad still stehen und somit ein neuer Schneid-Durchmesser *Df* eingestellt ist. Die Einstellung des Stellring-Verdreh-Winkels ψ stellt dementsprechend lediglich eine Phasenverschiebung gegenüber der Justierstellung dar.

Es wird hier wiederum darauf verzichtet, den genauen mathematischen Zusammenhang zwischen dem Drehwinkel *β* des Sonnenrads 52 und dem Schneidedurchmesser *Df* herzuleiten. Ein Fachmann könnte ohne Schwierigkeiten diesen Zusammenhang durch trigonometrische Überlegungen herleiten. Es wird hier lediglich darauf hingewiesen, dass es auch hier möglich ist, den Zusammenhang zwischen *β* und *Df* herzuleiten. Anstatt das Sonnenrad 52 über das fünfte Zahnriemenrad 54 anzutreiben, könnte es auch direkt über einen Getriebemotor angetrieben werden.

Wichtig zu beachten ist, dass auch hier die Einstellung des Schneid-Durchmessers *Df* mit rotierenden oder mit nicht rotierenden Messern erfolgen kann. Mit der Vorrichtung 300 ist es also möglich die oben beschriebenen Ausführungsformen des erfindungsgemässen Verfahrens präzis durchzuführen und eine sollbruchstelle in einer Schirmfolie zu erzeugen. Darüber hinaus kann die Vorrichtung 300 mittels zur Detektion der Berührung der Werkzeuge mit einem leitfähigen Gegenstand (hier nicht gezeigt), wie zum Beispiel dem metallischen Teil der Schirmfolie oder dem Schirmgeflecht, umfassen. Dadurch kann eine Sollbruchstelle noch präziser erzeugt werden und sichergestellt werden, dass das Schirmgeflecht nicht verletzt wird.

Ein Fachmann wird leicht verstehen, dass die Messer 23 der Vorrichtungen 100, 200 und 300 ohne weiteres durch Peforationsnadeln ersetzt werden können. Die Peforationsnadeln ermöglichen dann eine Perforierung der Schirmfolie und dadurch das Erzeugen einer Sollbruchstelle.

Es ist auch anzumerken, dass, obwohl in den hier präsentierten Ausführungsformen der Abstand der Messer 23 in Bezug auf Drehachse X mittels eines Schwenkmechanismus eingestellt wird, ein Fachmann selbstverständlich andere bekannte Schliess- bzw. Öffnungsmechanismen im Rahmen der vorliegenden Erfindung anwenden könnte. Insbesondere würde ein Fachmann erkennen, dass dafür ohne weiteres ein Spiralflansch eingesetzt werden könnte. Ein Spiralflansch würde insbesondere ermöglichen, dass die Messer 23 radial in Bezug auf die Drehachse X verschoben werden könnten.

Figur 13 zeigt eine nicht unter den Schutzumfang der Ansprüche fallende Abziehvorrichtung 400, die für das Abreissen und Abziehen der Schirmfolie benutzt werden kann, nachdem eine Sollbruchstelle S erzeugt wurde. Die Abziehvorrichtung 400 verfügt über eine erste Klemmbacke 401 und eine zweite Klemmbacke 402 zum Klemmen eines Kabels. Wie aus Figur 13 ersichtlich, sind die Klemmbacken 401,402 drehend um die Achsen FA und GA montiert. Die Klemmbacken 401,402 sind somit an einer kardanischen Aufhängung angebracht. Die Abziehvorrichtung 400 umfasst auch die Füsse 407 mit welchen der ersten Rahmen 403 der kardanischen Aufhängung mit Mitteln zur translatorischen und drehenden Bewegung (hier nicht gezeigt) verbunden werden kann. Damit kann die ganze Abziehvorrichtung 400 entlang der Richtungen MA, NA und GA translatorisch verschoben und in Drehrichtung PA gedreht werden.

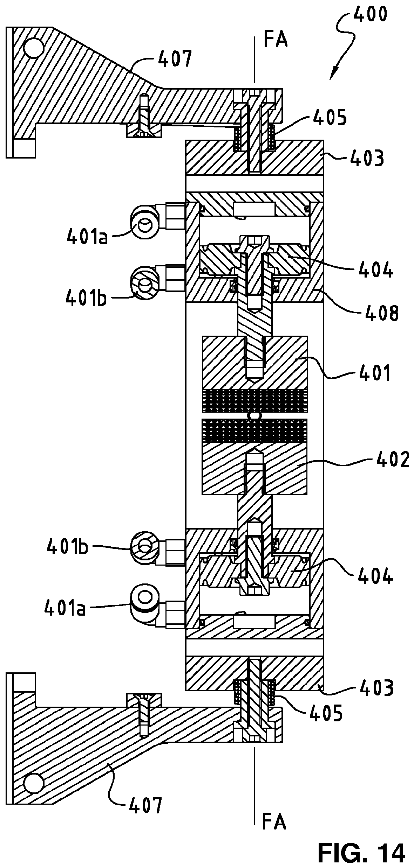

Wie in Figur 14 gezeigt, sind die Klemmbacken 401,402 an den beiden Druckkolben 404 angebracht. Mit den Druckluftanschlüssen 401a,401b,402a,402b kann Druckluft eingelassen werden, um die Position der Klemmbacken 401,402 entlang der Achse FA einzustellen. Wie aus dieser Figur ersichtlich, verfügen die Klemmbacken 401 und 402 über getrennte Druckluftanschlüsse 401a,401b,402a,402b. Die Abziehvorrichtung verfügt auch über Schenkelfedern 405 um die Achsen GA und FA zwischen dem ersten Rahmen 403 und den Füssen 407 und zwischen dem zweiten Rahmen 408 und dem ersten Rahmen 403. Mit den Schenkelfedern 405 wird sichergestellt, dass der erste Rahmen 403 und der zweite Rahmen 408 in Ruhestellung, d.h. bevor das Kabel mit den Klemmbacken eingeklemmt wird, senkrecht zur Längsachse L ausgerichtet sind. Die Abziehvorrichtung könnte an Stelle des Druckluftantriebs über einen hydraulischen Antrieb verfügen. Die Klemmbacken in der kardanischen Aufhängung sind vorteilhafterweise mit einem Volumenstromteiler, zum Beispiel mit einem Doppelkolbenaktuator, oder mit einer gegenläufigen Spindel angetrieben. Damit werden die Klemmbacken immer symmetrisch bezüglich der Längsachse betrieben.

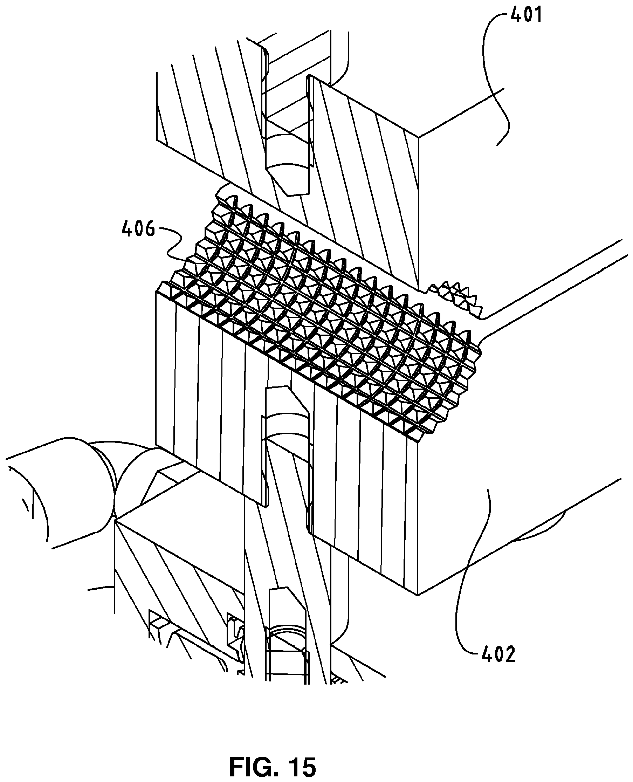

Figur 15 zeigt eine Detailansicht der Klemmbacken 401 und 402 der Abziehvorrichtung 400. Die mit dem Kabel in Berührung kommenden Oberflächen der Klemmbacken 401, 402 weisen in dieser Ausführungsform eine haftreibungskrafterhöhende Struktur auf. Damit kann das Kabel besser geklemmt werden damit der Abziehvorgang ohne Rutschen des Kabels verläuft.

Der Schutzbereich der Erfindung wird durch die Patentansprüche definiert.

### Bezugsliste

1. Erstes Zahnriemenrad
2. Zweites Zahnriemenrad
3. Drittes Zahnriemenrad
4. Viertes Zahnriemenrad
5. Umlenkrolle
6. Spannrolle
7. Spindel
8. Erster Schlitten
9. Zweiter Schlitten
10. Antriebswelle
11. Erster Zahnriemen
12. Zweiter Zahnriemen
13. Antriebsmittel, erster Motor
13a. Erster Motorzahnriemen
14. Zweiter Motor
14a. Zweiter Motorzahnriemen
15. Feder
16. Lagerhülse
17. Stellring
18. Stellmittel, Stellstifte
19. Rotor
20. Schwenkstifte
21. Werkzeugflansch
22. Federbolzen
23. Werkzeuge
25. Abzugsrohr
30. Umlenkriemen
31a. erste bewegbare Umlenkrolle
31b. zweite bewegbare Umlenkrolle, bewegbare Spannrolle
31c. erste nichtbewegbare Umlenkrolle
31d. zweite nichtbewegbare Umlenkrolle
32. Schlitten
33. Spindel
34. Schiene
50. Planetengetriebe
51. Planetenräder
52. Sonnenrad
53. Welle
54. fünftes Zahnriemenrad
55. Hohlkörper
55a. innere Verzahnung des Hohlkörpers, Hohlrad
100. Vorrichtung gemäss erster Ausführungsform
200. Vorrichtung gemäss zweiter Ausführungsform
300. Vorrichtung gemäss dritter Ausführungsform
400. Abziehvorrichtung
401, 402. Klemmbacken
401a,401b,402a,402b. den Druckluftanschlüssen
403. Erster Rahmen
404. Druckkolben
405. Schenkelfeder
406. Oberfläche der Klemmbacken
407. Füsse
408. Zweiter Rahmen
λ Messer-Schwenk-Winkel
η. Stellring-Justier-Winkel
ψ. Stellring-Verdreh-Winkel
ϕ. Stellring-Gesamt-Winkel
Ka. Kabel
K1. Isolierender Mantel
K2. Schirmfolie
K3. Schirmgeflecht
K4. Dielektrikum
K5. Innenleiter
EK. Einschnitt im Kabel
L. Längsachse des Kabels
S. Sollbruchstelle in der Schirmfolie

## Patentansprüche

1. Verfahren zur Entfernung einer Schirmfolie (K2) eines elektrischen Kabels (Ka) mit einer Längsachse (L), welches von der Längsachse ausgehend nach aussen mindestens einen Innleiter (K5), ein Dielektrikum (K4), die Schirmfolie (K2) und einen isolierenden Mantel (K1) aufweist, wobei das Kabel (Ka) vorzugsweise ein Schirmgeflecht (K3) zwischen Dielektrikum (K4) und Schirmfolie (K2) aufweist,
umfassend die folgenden Schritte:
a. Erzeugen eines Einschnitts (EK) einer ersten Tiefe (T1) im isolierenden Mantel (K1) des elektrischen Kabels (Ka), zum Beispiel mittels der rotierenden Messer (23) einer rotativen Abisoliervorrichtung (100,200,300), wobei die erste Tiefe (T1) kleiner oder gleich der Dicke des isolierenden Mantels (K1) ist;
b. Erzeugen einer Sollbruchstelle (S) in der Schirmfolie (K2) durch Eindrücken mindestens eines radial zustellbaren Perforationswerkzeugs durch den im Schritt a. erzeugten Einschnitt (EK) bis das Perforationswerkzeug eine zweite Tiefe (T2) erreicht hat, wobei die zweite Tiefe (T2) mindestens der Dicke des isolierenden Mantels (K2) plus wenigstens der Hälfte der Dicke der Schirmfolie (K2) entspricht;
c. Durchreissen der Schirmfolie an der Sollbruchstellte (S); und
d. Abziehen der Schirmfolie (K2),
wobei das Perforationswerkzeug mit Mitteln zur Detektion einer Berührung mit einem elektrisch leitfähigen Gegenstand verbunden ist,
wobei das Perforationswerkzeug nach einer Detektion einer Berührung mit der Schirmfolie (K2) oder mit dem Schirmgeflecht (K3) um einen vorbestimmten Wert weiter in Richtung des Innenleiters (K5) des elektrischen Kabels radial zugestellt wird.

2. Verfahren gemäss Anspruch 1, wobei zwischen den Schritten b. und c. oder zwischen den Schritten c. und d. das Perforationswerkzeug an eine Position ausserhalb des isolierenden Mantels zurückgestellt wird.

3. Verfahren gemäss einem der Ansprüche 1 oder 2, wobei zwischen den Schritten a und b, der isolierende Mantel teilweise oder voll abgezogen wird.

4. Verfahren gemäss einem der vorherigen Ansprüche, wobei die Schirmfolie (K2) mindestens teilweise aus Metall besteht und wobei das Eindrücken des Perforationswerkzeuges gestoppt wird, sobald eine Berührung des Perforationswerkzeuges mit der Schirmfolie (K2) detektiert wird.

5. Verfahren gemäss einem der Ansprüche 1 bis 4, wobei das Eindrücken des Perforationswerkzeuges gestoppt wird, sobald eine Berührung des Perforationswerkzeuges mit der Schirmfolie (K2) oder dem Schirmgeflecht (K3) detektiert wird.

6. Verfahren gemäss Anspruch 1, wobei die relative Position des Perforationswerkzeugs bezüglich der Längsachse (L) bei der Detektion einer Berührung des Perforationswerkzeugs mit der Schirmfolie (K2) oder mit dem Schirmgeflecht (K3) zu einer Analysevorrichtung übermittelt wird.

7. Verfahren gemäss einem der vorherigen Ansprüche, wobei Schritt b. mindestens einmal wiederholt wird, nachdem das Perforationswerkzeug zurück gefahren wurde und um einen Verstellwinkel (α) um das elektrische Kabel (Ka) gedreht wurde.

8. Verfahren gemäss einem der vorherigen Ansprüche, wobei das Perforationswerkzeug ein Messer einer rotativen Abisoliervorrichtung ist, wobei das Messer während dem Schritt b. nicht rotiert.

9. Verfahren gemäss einem der Ansprüche 1 bis 7, wobei das Perforationswerkzeug eine Nadel ist.

10. Verfahren gemäss Anspruch 9, wobei die Nadel gefedert ist.

11. Verfahren gemäss einem der Ansprüche 1 bis 10, wobei das Perforationswerkzeug ultraschallerregt ist.

12. Verfahren gemäss Anspruch 11, wobei die Ultraschallerregung eine Frequenz zwischen 10 bis 100 kHz, vorteilhafterweise zwischen 20 und 80 kHz, vorzugsweise zwischen 30 und 50 kHz, aufweist.

13. Verfahren gemäss einem der vorherigen Ansprüche, wobei Schritt c. und/oder Schritt d. mittels einer Abziehvorrichtung (400) durchgeführt wird, die Klemmbacken (401, 402) zum Klemmen des isolierenden Mantels (K1) des elektrischen Kabels (Ka) oder der Schirmfolie (K2) umfasst, wobei durch eine translatorische und/oder drehende Bewegung der Klemmbacken (401, 402) die Schirmfolie (K2) an der Sollbruchstelle (S) reisst.

14. Verfahren gemäss Anspruch 13, wobei zwischen dem Schritt c. und d. und/oder während dem Schritt c. die Klemmbacken (401,402) eine Pendelbewegung um die Längsachse (L) ausführen, wobei bei der Pendelbewegung der Klemmbacken (401,402) um die Längsachse (L) vorzugsweise zuerst eine Bewegung gegen die Wicklungsrichtung des Schirmgeflechtes (K3) ausgeführt wird.

15. Verfahren gemäss einem der Ansprüche 13 bis 14, wobei durch die Bewegung der Klemmbacken (401, 402) das Kabel mit der Schirmfolie (K2) an der Sollbruchstelle (S) gebogen wird.

## Claims

1. Method for removing a shielding foil (K2) of an electrical cable (Ka) with a longitudinal axis (L), which cable has, going out from the longitudinal axis outward, at least one inner conductor (K5), a dielectric (K4), the shielding foil (K2) and an insulating sheath (K1), whereby the cable (Ka) preferably has a shielding braid (K3) between dielectric (K4) and shielding foil (K2),
comprising the following steps:
a. Creating an incision (EK) of a first depth (T1) in the insulating sheath (K1) of the electrical cable (Ka), for example by means of the rotating blades (23) of a rotary stripping apparatus (100, 200, 300), whereby the first depth (T1) is smaller than or the same as the thickness of the insulating sheath (K1);
b. Creating a predetermined breaking point (S) in the shielding foil (K2) through pressing in of at least one radially adjustable perforation tool through the incision (EK) produced in step a. until the perforation tool has reached a second depth (T2), whereby the second depth (T2) corresponds to at least the thickness of the insulating sheath (K2) plus at least half of the thickness of the shielding foil (K2);
c. Tearing the shielding foil at the predetermined breaking point (S); and
d. Removing the shielding foil (K2),
whereby the perforation tool is connected to means for detection of a contact with an electrically conductive object,
whereby after detecting contact with the shielding foil (K2) or with the shielding braid (K3), the perforation tool is advanced radially by a predetermined value in the direction of the inner conductor (K5) of the electrical cable.

2. Method according to claim 1, whereby between the steps b. and c. or between the steps c. and d. the perforation tool is put back in a position outside of the insulating sheath.

3. Method according to one of the claims 1 or 2, whereby between steps a. and b., the insulating sheath is partially or completely removed.

4. Method according to one of the preceding claims, whereby the shielding foil (K2) consists at least partially of metal and whereby the pressing in of the perforation tool is stopped as soon as a contact of the perforation tool with the shielding foil (K2) is detected.

5. Method according to one of the claims 1 to 4, whereby the pressing in of the perforation tool is stopped as soon as a contact of the perforation tool with the shielding foil (K2) or the shielding braid (K3) is detected.

6. Method according to claim 1, whereby the relative position of the perforation tool with respect to the longitudinal axis (L) during the detection of a contact of the perforation tool with the shielding foil (K2) or with the shielding braid (K3) is transmitted to an analysis device.

7. Method according to one of the preceding claims, whereby step b. is repeated at least once after the perforation tool has been driven back and has been rotated about the electrical cable (Ka) by an adjustment angle (α).

8. Method according to one of the preceding claims, whereby the perforation tool is a blade of a rotary stripping device, whereby the blade does not rotate during step b.

9. Method according to one of the claims 1 to 7, whereby the perforation tool is a needle.

10. Method according to claim 9, whereby the needle is spring loaded.

11. Method according to one of the claims 1 to 10, whereby the perforation tool is ultrasonically excited.

12. Method according to claim 11, whereby the ultrasonic excitation has a frequency between 10 and 100 kHz, advantageously between 20 and 80 kHz, preferably between 30 and 50 kHz.

13. Method according to one of the preceding claims, whereby step c. and/or step d. is carried out by means of a removal device (400), which comprises clamping jaws (401, 402) for clamping the insulating sheath (K1) of the electrical cable (Ka) or the shielding foil (K2), whereby through a translational and/or rotational movement of the clamping jaws (401, 402) the shielding foil (K2) tears at the predetermined breaking point (S).

14. Method according to claim 13, whereby between step c. and d. and/or during step c. the clamping jaws (401,402) carry out a reciprocating movement around the longitudinal axis (L), whereby with the reciprocating movement of the clamping jaws (401,402) around the longitudinal axis (L) preferably first a movement against the winding direction of the shielding braid (K3) is carried out.

15. Method according to one of the claims 13 to 14, whereby through the movement of the clamping jaws (401, 402) the cable with the shielding foil (K2) is bent at the predetermined breaking point (S).

## Revendications

1. Procédé de retrait d'un film de blindage (K2) d'un câble électrique (Ka) s'étendant selon un axe longitudinal (L), lequel câble possède, de l'axe longitudinal vers l'extérieur selon la direction radiale, au moins un conducteur intérieur (K5), un diélectrique (K4), le film de blindage (K2) et une gaine isolante (K1), le câble (Ka) présentant de préférence une tresse de blindage (K3) entre le diélectrique (K4) et le film de blindage (K2),
comprenant les étapes suivantes :
a. Création d'une incision (EK) d'une première profondeur (T1) dans la gaine isolante (K1) du câble électrique (Ka), par exemple au moyen de lames rotatives (23) d'un appareil de décapage rotatif (100, 200, 300), la première profondeur (T1) étant inférieure ou égale à l'épaisseur de la gaine isolante (K1) ;
b. Création d'un point de rupture prédéterminé (S) dans le film de blindage (K2) par le biais d'une application d'au moins un outil de perforation ajustable de manière radiale à travers l'incision (EK) produite à l'étape a. jusqu'à ce que l'outil de perforation ait atteint une deuxième profondeur (T2), la deuxième profondeur (T2) correspondant au moins à l'épaisseur du film de blindage (K2) plus au moins une moitié de l'épaisseur du film de blindage (K2) ;
c. Déchirure du film de blindage au point de rupture prédéterminé (S) ; et
d. Suppression du film de blindage (K2),
l'outil de perforation étant connecté à des moyens de détection d'un contact avec un objet électriquement conducteur,
après avoir détecté un contact avec le film de blindage (K2) ou avec la tresse de blindage (K3), l'outil de perforation étant avancé de manière radiale selon une valeur prédéterminée dans la direction du conducteur interne (K5) du câble électrique.

2. Procédé selon la revendication 1, selon lequel l'outil de perforation est remis en place dans une position en dehors de la gaine isolante entre les étapes b. et c. ou entre les étapes c. et d.

3. Procédé selon l'une des revendications 1 ou 2, selon lequel la gaine isolante est retirée partiellement ou complètement entre les étapes a. et b.

4. Procédé selon l'une des revendications précédentes, le film de blindage (K2) étant au moins partiellement constitué de métal et l'enfoncement de l'outil de perforation étant arrêté dès qu'un contact de l'outil de perforation avec le film de blindage (K2) est détecté.

5. Procédé selon l'une des revendications 1 à 4, l'enfoncement de l'outil de perforation étant arrêté dès qu'un contact de l'outil de perforation avec le film de blindage (K2) ou la tresse de blindage (K3) est détecté.

6. Procédé selon la revendication 1, par lequel la position relative de l'outil de perforation par rapport à l'axe longitudinal (L) pendant la détection d'un contact de l'outil de perforation avec le film de blindage (K2) ou avec la tresse de blindage (K3) est transmis à un dispositif d'analyse.

7. Procédé selon l'une des revendications précédentes, l'étape b. étant répétée au moins une fois après que l'outil de perforation a été repoussé et a été tourné autour du câble électrique (Ka) selon un angle d'ajustement (α).

8. Procédé selon l'une des revendications précédentes, l'outil de perforation étant une lame d'un dispositif de décapage rotatif, la lame ne tournant pas pendant l'étape b.

9. Procédé selon l'une des revendications 1 à 7, l'outil de perforation étant une aiguille.

10. Procédé selon la revendication 9, l'aiguille étant à ressort.

11. Procédé selon l'une des revendications 1 à 10, l'outil de perforation étant excité par les ultrasons.

12. Procédé selon la revendication 11, l'excitation ultrasonique ayant une fréquence entre 10 et 100 kHz, avantageusement entre 20 et 80 kHz, de préférence entre 30 et 50 kHz.

13. Procédé selon l'une des revendications précédentes, l'étape c. et/ou d. étant effectuée au moyen d'un dispositif d'enlèvement (400), qui comprend des mâchoires de serrage (401, 402) pour le serrage de la gaine isolante (K1) du câble électrique (Ka) ou le film de blindage (K2), le film de blindage (K2) se déchirant au point de rupture prédéterminé (S) suite à un mouvement translationnel et/ou rotationnel des mâchoires de serrage (401, 402).

14. Procédé selon la revendication 13, les mâchoires de serrage (401, 402) effectuant un mouvement de va-et-vient autour de l'axe longitudinal (L) entre l'étape c. et d. et/ou pendant l'étape c., de préférence d'abord un mouvement contre le sens d'enroulement de la tresse de blindage (K3) étant effectué avec le mouvement de va-et-vient des mâchoires de serrage (401, 402) autour de l'axe longitudinal (L).

15. Procédé selon l'une des revendications 13 à 14, le câble avec le film de blindage (K2) étant plié au niveau du point de rupture prédéterminé (S) suite au mouvement des mâchoires de serrage (401, 402).
